# EUROPEAN PATENT APPLICATION

(11) **EP 4 598 083 A1**
(43) Date of publication of application: **06.08.2025**
(21) Application number: 23871794.6
(22) Date of filing: 07.09.2023
(51) Int. Cl.: H04W 16/04, H04W 16/10, H04W 88/14, H04W 92/14

(54) **INFORMATION PROCESSING DEVICE, AND INFORMATION PROCESSING METHOD**

(30) Priority: 26.09.2022 JP 2022152624
(71) Applicant: Sony Group Corporation, Tokyo 108-0075 (JP)
(72) Inventor: TAKANO, Hiroaki, Tokyo 108-0075 (JP)
(74) Representative: Witte, Weller & Partner Patentanwälte mbB
(86) International application number: PCT/JP2023/032608
(87) International publication number: WO 2024/070555

(57) **Abstract**

An information processor includes a detection unit that detects that a predetermined condition regarding communication using a predetermined cellular network is satisfied in at least a part of a providing area of the predetermined cellular network, and an execution unit that executes, when it is detected that the predetermined condition is satisfied, processing for enhancing a communication function related to the communication performed in an area where it is detected that the predetermined condition is satisfied.

## Description

### Field

The present disclosure relates to an information processor and an information processing method.

### Background

Development of cellular wireless communication such as 5G has been active. In recent years, a private network using the cellular wireless communication has been drawing attention.

### Citation List

### Patent Literature

Patent Literature 1: JP 2021-175107 A

### Summary

### Technical Problem

A cellular wireless communication system does not necessarily have sufficient traffic processing capability to always satisfy a communication demand by 100%. Therefore, in the cellular wireless communication system, it may be difficult to provide communication with high communication performance (e.g., stable communication quality, high communication quality, low delay, high reliability, and high throughput) due to, for example, regional or temporal uneven distribution of communication demands. Particularly, a private network is often installed in a specific area such as a stadium. Therefore, for example, it is assumed that a situation in which it is difficult to provide communication with high communication performance remarkably occurs due to a rapid increase in the number of terminal devices caused by events or the like.

Therefore, the present disclosure proposes an information processor and an information processing method capable of realizing communication with high communication performance.

Note that the above problem or object is merely one of a plurality of problems or objects that can be solved or achieved by a plurality of embodiments disclosed in the present specification.

### Solution to Problem

In order to solve the above problem, an information processor according to one embodiment of the present disclosure includes: a detection unit configured to detect that a predetermined condition regarding communication using a predetermined cellular network is satisfied in at least a part of a providing area of the predetermined cellular network; and an execution unit configured to execute, when it is detected that the predetermined condition is satisfied, processing for enhancing a communication function related to the communication performed in an area where it is detected that the predetermined condition is satisfied.

### Brief Description of Drawings

FIG. 1 is a diagram illustrating an example of a private network.
FIG. 2 is a diagram illustrating a communication system when a destination is one 4G/5G private network.
FIG. 3 is a diagram illustrating a communication system when a destination is a plurality of 4G/5G private networks.
FIG. 4 is a diagram illustrating a configuration example of a cellular network according to the present embodiment.
FIG. 5 is a diagram illustrating a configuration example of a communication system according to an embodiment of the present disclosure.
FIG. 6 is a diagram illustrating another configuration example of the communication system according to the embodiment of the present disclosure.
FIG. 7 is a diagram illustrating a configuration example of a management device according to the embodiment of the present disclosure.
FIG. 8 is a diagram illustrating a configuration example of a base station according to the embodiment of the present disclosure.
FIG. 9 is a diagram illustrating a configuration example of a terminal device according to the embodiment of the present disclosure.
FIG. 10 is a diagram illustrating a configuration example of a network management device according to the embodiment of the present disclosure.
FIG. 11 is a diagram illustrating an example of a 5G architecture.
FIG. 12 is a diagram illustrating an example of a 4G architecture.
FIG. 13 is a sequence diagram illustrating communication processing according to a first embodiment.
FIG. 14 is a diagram illustrating a network slice.
FIG. 15 is a diagram illustrating a problem of a second embodiment.
FIG. 16 is a block diagram illustrating a configuration example of an LSCF.
FIG. 17 is a sequence diagram illustrating communication processing according to the second embodiment.
FIG. 18 is a diagram illustrating a network slice newly prepared by the network management device.
FIG. 19 is a sequence diagram illustrating communication processing according to a third embodiment.
FIG. 20 is a sequence diagram illustrating communication processing according to a fourth embodiment.

### Description of Embodiments

Hereinafter, embodiments of the present disclosure will be described with reference to the drawings. In each of the following embodiments, same parts are given the same reference signs to omit redundant description.

In addition, in the present specification and the drawings, a plurality of components having substantially the same functional configuration may be distinguished by attaching different numerals after the same reference sign. For example, a plurality of configurations having substantially the same functional configuration is distinguished as terminal devices 30₁, 30₂, and 30₃ as necessary. However, when it is not particularly necessary to distinguish each of the plurality of components having substantially the same functional configuration, only the same reference sign is given. For example, in a case where it is not necessary to particularly distinguish the terminal devices 30₁, 30₂, and 30₃, they are simply referred to as terminal devices 30.

In the description below, one or more embodiments (including examples and modifications) can be implemented independently. On the other hand, at least some of the plurality of embodiments described below may be appropriately combined with at least some of other embodiments. The plurality of embodiments may include novel features different from each other. Therefore, the plurality of embodiments can contribute to solving different objects or problems, and can exhibit different effects.

### <<1. Outline>>

In recent years, private networks such as a local 5G and a private 5G have been attracting attention. The private network is also referred to as a non-public network.

### <1-1. Private network>

Before describing an overview of the present embodiments, the private network will be described.

### <1-1-1. Local 5G/Private 5G>

The local 5G and the private 5G are cellular communication services performed in a limited area such as a factory, an office, a studio, a hospital, and a university. By providing the service in a limited local area, there is an advantage that a customized cellular service can be provided. In the present embodiment, the private 5G and the local 5G may be referred to as a 4G/5G private network or a 4G/5G virtual private network. Note that the private network is not limited to the 4G/5G private network. In the following description, the private network may be referred to as a non-public cellular closed network or simply a closed network.

Security is given importance in many use cases. For example, in the case of a factory, a factory production line handles technology with high confidentiality. Also in a hospital, for example, personal information regarding privacy of a patient is often handled, and thus, this is a use case with high confidentiality. Also in universities and offices, personal information is often handled, and communication related to the personal information requires high confidentiality.

### <1-1-2. Features of private network>

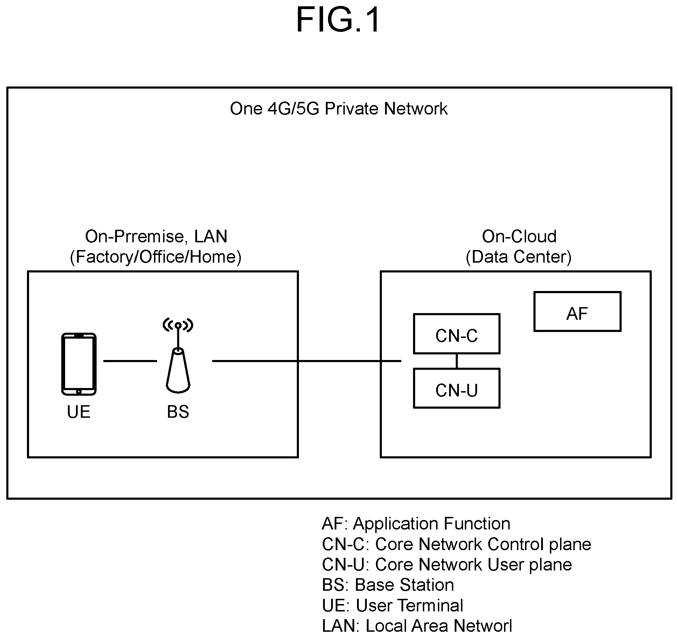

Next, features of the private network will be described. FIG. 1 is a diagram illustrating an example of the private network.

### (1) Properties of closed network

In the private network, a LAN and a cloud are connected in a closed network. The closed network is, for example, a virtual private network (VPN). In the closed network, a base station disposed in the LAN and a core network disposed in the cloud are connected using a private IP address without using a public IP address. When communication is performed only in the closed network, the network is resistant to eavesdropping from outside and the like. In addition, setting to completely block access from the outside of the closed network is possible. Still more, it is possible to send a packet from inside to outside the closed network and only allow a response to enter the closed network. In general, it is not possible to access a device or a terminal device in the closed network by applying a trigger from outside the closed network. Thus, it can be said that the confidentiality of the closed network is high.

Since conversion between a private IP address and a global IP address is not required, user datagram protocol (UDP) communication can be easily used. When conversion is required, a transmission control protocol (TCP) is usually used. Therefore, a feature that it is easy to use UDP communication is attractive for an application using UDP communication. The use of UDP has an advantage that a delay is small.

### (2) IP address assigned to terminal device

When the terminal device accesses the network, an IP address is assigned from the core network to the terminal device. Usually, a private IP address is assigned. In the case of a public network, a public IP address may be directly assigned to the terminal device, but in a 4G/5G private network that is a non-public network, the private IP address is usually assigned to the terminal device. Therefore, when going out from the closed network, the private IP address is converted into the public IP address by network address translation (NAT).

It is possible to acquire the information on the IP address assigned to the terminal device from the core network. In the 5G, an application program interface (API) called a service based interface (SBI) is provided to acquire the IP address of the terminal device. Even in the 4G, the IP address of the terminal device can be acquired similarly to the 5G by accessing a subscriber file storing the IP address of each terminal device.

In the closed network, by holding the IP address of the terminal device, it is possible to directly transmit an IP packet to the terminal device from an application function (AF) side (i.e., network initiated message push).

### <1-1-3. Cooperation of a plurality of private networks>

Next, cooperation of a plurality of private networks is considered. For example, a case of connecting a plurality of 4G/5G private networks over the Internet will be considered. In this case, since a packet is once sent to the public Internet, a security threat increases. It is not desirable, from the security perspective, to directly transmit the IP address of the terminal device to a destination. In addition, since the private IP address is converted into the public IP address once when using the Internet, a problem of network address translation (NAT) traversal occurs. Therefore, direct UDP communication is difficult.

Note that, in a normal cellular communication, when a packet is transmitted from outside the cellular network to a terminal device by specifying the IP address, the packet may or may not arrive directly. Although it is limited to a case where a telecommunications carrier has abundant global IP addresses, when a global IP address is directly assigned to the terminal device, it is possible to directly send a packet from outside to the global IP address. However, it can be said that this depends on a security policy. When a packet can be directly sent, there is a risk that undesired traffic flows in from the outside, and therefore such a packet is not allowed in most cases. In other words, since the security threat is large, a degree of freedom may be reduced when a security measure is taken. It is not desirable, from the security perspective, to directly transmit the IP address of the terminal device to a destination. In the case of a cellular system, there is also a problem that cost of the cellular network is higher than that of the 4G/5G private network. Therefore, it will be important in the future to prepare a plurality of 4G/5G private networks and directly connect the 4G/5G private networks by a VPN tunnel.

Therefore, hereinafter, a case where different private networks are connected by the VPN tunnel will be considered.

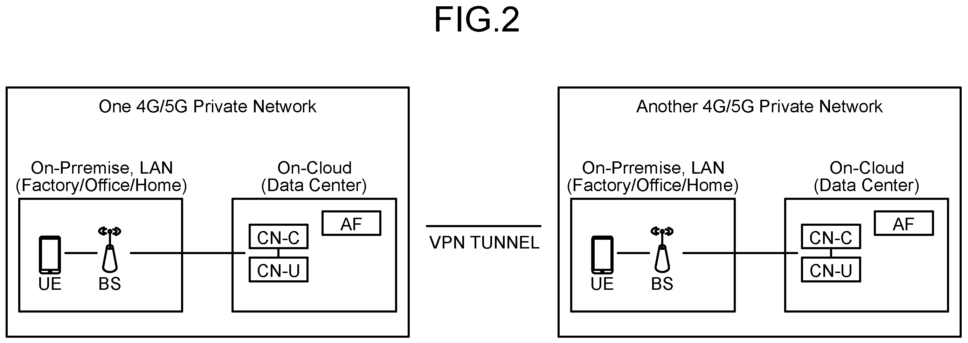

FIG. 2 is a diagram illustrating a communication system when the destination is one 4G/5G private network. In an example in FIG. 2, two 4G/5G private networks are directly connected by VPN tunneling. Since closed networks are connected to each other, the packet can be transmitted to the terminal device or a client application of the destination using the private IP address in the closed networks.

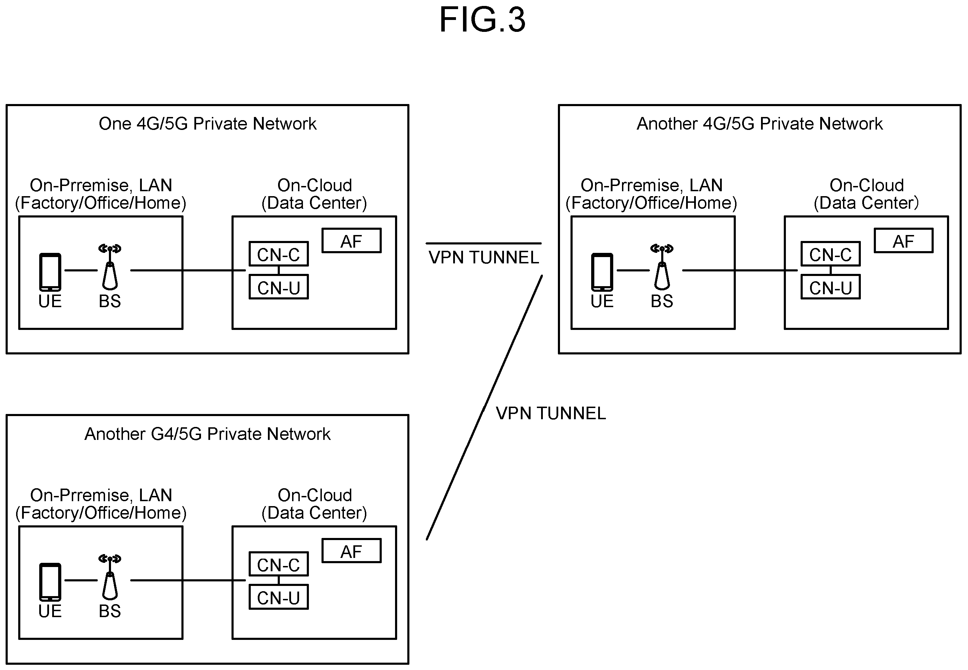

FIG. 3 is a diagram illustrating a communication system when the destination is a plurality of 4G/5G private networks. When there are a plurality of destinations, as illustrated in FIG. 3, the VPN tunnel is set with each of the plurality of destinations. A star connection is not desirable because there is a large influence when a failure occurs in a central switch. In the case of 1:1 pairing, since information is spread only to the destination, this topology is desirable also from the security perspective.

Note that a method of connecting the plurality of 4G/5G private networks by secure communication is not limited to a method using the virtual private network (VPN) tunnel. As a method of connecting the plurality of 4G/5G private networks by secure communication, for example, a method of connection by a dedicated line is conceived.

### <1-1-4. Use case of private network>

Next, a use case of a private network will be described, specifically, a use case of a network in which a plurality of 4G/5G private networks cooperate will be described. As the use case of the private network, the following is conceived.

### (1) IoT (Internet of Things)

There is a request to arrange IoT devices under the 4G/5G private network, control the IoT devices by an information processor, and extract information from the IoT devices. In this case, when the IoT devices in only one 4G/5G private network are controlled to acquire information, there is a problem of an insufficient scale of the IoT system since the number of IoT sensors is limited. Therefore, there is a demand for collecting the information by cooperation of the plurality of private networks. In this case, a location of the IoT device to communicate with is often known in advance. Since TCP connection tends to impose a heavy load of power consumption on the IoT device, there is a demand for communication using UDP.

### (2) Game

When playing a network game, it may be conceived that another player belongs to a different 4G/5G private network. In this case, since a player with which communication is desired is the player determined by a server of the game, it is often not known who to communicate with until immediately before. In this case, communication by UDP rather than TCP is often demanded due to delay constraints.

### (3) Remote monitoring

One may wish to monitor a video from a remote camera. In the case of a video such as VR, a large capacity and a low latency may be required. It is desirable, from the security perspective, that communication can be performed between 4G/5G private networks when a monitoring video is very important information.

### (4) Others

A plurality of private networks may belong to different operators. It is desirable that one operator performs network management of the plurality of private networks, but customers using the private networks are different. For example, it is assumed that there are a customer A who measures wind power in a first area **(e.g.,** Japan) using an IoT sensor capable of measuring the wind power, and a customer B who measures wind power in a second area (e.g., Europe) using an IoT sensor. Then, it is assumed that a terminal device of the customer A is connected to a private network A, and a terminal device of the customer B is connected to a private network B. At this time, it is assumed that an operator C needs to collect information from the terminal devices of the customers A and B using a terminal device connected to a private network C. In this case, it is considered that the operator C desires to connect the private networks A and B.

### <1-2. Localized service>

Although the private network has been described above, before describing the outline of the present embodiment, a localized service that is an important element of the present embodiment will be described. The localized service may be referred to as a localization service or a local service.

### <1-2-1. Definition of localized service>

The localized service basically refers to a communication service localized regionally or temporally. A communication network (communication system) that provides the localized service starts the localized service, for example, when a UE requiring a specific service locally exists in a certain place or under a certain condition. At this time, the terminal device may be configured to detect the start of the localized service and enjoy the service. It may be said that a conventional localized service is defined as a service provided in a specific place and at a specific time. The localized service is used in both downlink and uplink.

For example, it is common to consider that the localized service is provided by using a communication network (communication infrastructure) different from an original communication network (communication infrastructure) provided by a predetermined operator. However, in the present embodiment, a communication service different from the original communication service provided in one communication infrastructure is also included in the localized service. Obviously, the localized service may be a service provided in a communication network (communication infrastructure) different from the original communication network (communication infrastructure). Furthermore, the localized service may be a service that provides a resource necessary for communication in the same communication network mechanism. The localized service may be the communication service itself. Furthermore, the localized service may be a service specific to a certain place or a service specific to a certain time.

In 3GPP (registered trademark) Release 18 SA2, standardization of a non-public network (private network) has been studied (Rel18 TS22.261 Section 6.41 and Rel18 TR23.700). In this context, the term localized service is used, and the localized service studied here is mainly provision of radio waves via a base station. In 3GPP, communication services such as broadcast and multicast are also regarded as use cases of the localized service. In other words, the way of considering the conventional localized service as the provision of radio waves is basically dominant. However, in the present embodiment, the definition of the localized service is extended not only to the provision of radio waves but also to the provision of a specific application service.

In the following description, the cellular network usually used by the user may be referred to as a home network. At this time, when a predetermined condition is satisfied in the home network, the communication system may provide a hosting network different from the home network as the localized service. The hosting network is a locally or temporally limited cellular network. Note that, in the present embodiment, the hosting network may be a network that covers a part of the area covered by the home network.

### <1-2-2. Localized service corresponding to state of UE or network>

Note that, in the above description, the localized service is basically a communication service localized regionally or temporally. However, it is assumed that a communication service corresponding to a state of user equipment (UE) and/or a state of a network is also required in the future. In particular, in the private network, a change in the state of the UE or a change in the state of the network occurs dynamically as compared with a normal cellular network. Therefore, in the private network, provision of a service corresponding to a change in state illustrated in the following (1) to (4) is assumed to be necessary.
(1) When communication environment surrounding the UE deteriorates
(2) When the number of UEs in a certain area exceeds a certain number
(3) When a network failure occurs
(4) When a change occurs in the number of PLMNs in a specific area

Therefore, in the present embodiment, the localized service includes a communication service corresponding to the state of the UE or the state of the network. In this case, the localized service may be resource allocation corresponding to a deteriorated state (or a change in state). For example, the localized service may be allocation of a new frequency resource and/or allocation of a computation resource of a new user plane function (UPF). Furthermore, the localized service may be a change of a private network to which the UE belongs.

### <1-2-3. Localized service related to application service>

Furthermore, the localized service may include a localized service related to the application service. At this time, the application service may be an application service that uses the private network. As an example of the localized service related to the application service, the following (1) and (2) are assumed.

### (1) Localized service related to transfer robots in a factory

An application service for controlling transfer robots operating in a factory in which the private network is arranged is assumed. In this case, when a control system of a transfer robot detects that the transfer robot has entered a specific area in a factory where the private network is arranged, the control system of the transfer robot starts a service related to robot control. For example, when the system detects that the transfer robot has come to a specific place, the system transmits a control signal to the transfer robot and issues an instruction to take out an object from the shelf. In the above service, the system needs to identify a transfer robot that has entered the area, identify an IP address corresponding to the transfer robot, and then transmit a control signal to the transfer robot. However, when the area of the private network is limited, it is difficult for the system to be in a state of being able to constantly communicate with the transfer robot by establishing a TCP connection in advance. Therefore, how to identify the transfer robot and acquire the IP address corresponding to the transfer robot is a problem. A localized service for solving this problem will be necessary. In this case, the localized service is not the provision of radio waves but processing related to transmission of the control signal to the transfer robot.

### (2) Localized service related to traffic control

An assumed application service is, when a car approaches a certain intersection, to notify the car whether any car is coming from a direction with poor visibility by using radio waves of a base station in a private network installed at the intersection. In this case, a traffic control system needs to identify an IP address of the car and then transmit information to the car. However, since the private network is locally installed in a limited area, it is difficult for the system to be able to communicate with the car constantly by establishing a TCP connection in advance. Therefore, it is difficult to identify a car to provide the application service and identify an IP address of the car. A localized service for solving this problem will be necessary. In this case, the localized service is not the provision of radio waves but processing related to transmission of information to the car.

### <1-2-4. Localized service related to a plurality of areas>

The conventional localized service is a service linked to one place. However, a localized service related to a plurality of areas may also be assumed. For example, when an entry of a person is detected in a plurality of areas where the private network is provided, a communication system may be assumed to provide a localized service to connect UEs entering the plurality of areas by voice communication or video communication for the purpose of connecting the plurality of areas by communication. In addition, a communication system may be assumed to provide a localized service in an area under control of a base station in another place based on a condition occurred on a network side (e.g., condition that the Internet line is congested).

Table 1 below indicates variations of conditions and service-providing places.

**Table 1**

| | Variations of conditions and service-providing places |
|---|---|
| 1 | Condition is established in one area |
| 2 | Condition is established in a plurality of areas |
| 3 | Condition is established on network side and service is provided in area |
| 4 | Condition is established in area and service is provided on network side |

As indicated in Table 1**,** next variations of conditions and service-providing places are assumed: (1) Case where a condition is established in one area and the localized service is provided in the one area (or a network related to the one area), (2) Case where a condition is established in a plurality of areas and the localized service is provided in the plurality of areas (or a network related to the plurality of areas), (3) Case where a condition is established on the network side and the localized service is provided in one or a plurality of areas related to the network, and (4) Case where a condition is established in one or a plurality of areas and the localized service is provided on the network side.

Note that the plurality of areas described above may be a plurality of areas in an area covered by one private network. Further, the plurality of areas may be a plurality of areas in an area covered by a plurality of private networks. Furthermore, in the above description, when the base stations are different, it may be interpreted that the areas are different. Further, the area may be defined regardless of the base station.

### <1-2-5. Who detects condition for starting localized service>

In the conventional localized service, the service is constantly provided. Then, the UE detects and receives the service provided constantly. However, the localized service of the present embodiment is not a service constantly provided. The service is desirably started to be provided when a certain condition is satisfied. In the present embodiment, the private network is assumed, but it is assumed that a distribution of UEs is often uneven in the private network. Therefore, frequency and time resource are occupied efficiently by starting to provide the service when the condition is satisfied. However, the localized service of the present embodiment is not limited to a service that is started to be provided when a condition is satisfied, and may be a service that is provided constantly.

Table 2 below indicates variations of a condition detection method.

**Table 2**

| | Condition detection method |
|---|---|
| 1 | Network side detects condition |
| 2 | UE side detects condition |
| 3 | Network side detects condition based on report of UE |

As illustrated in Table 2, the next cases are assumed as the variations of the condition detection method: (1) Case where the network side detects the condition, (2) Case where the UE side detects the condition, and (3) Case where the network side detects the condition based on a report of the UE. Here, an assumed condition for (1) is, for example, an earthquake, a fire, or deterioration in network quality on a core network side. An assumed condition for (2) is, for example, deterioration of radio reception quality (e.g., reference signals received power (RSRP)). An assumed condition for (3) is, for example, many UEs in a specific area.

### <1-3. Outline of problems and solutions of present embodiment>

Based on the above, an outline of problems and solutions of the present embodiment will be described.

A cellular wireless communication system does not necessarily have sufficient traffic processing capability to always satisfy a communication demand by 100%. Therefore, in the cellular wireless communication system, it may be difficult to provide communication with high communication performance (e.g., stable communication quality, high communication quality, low delay, high reliability, and high throughput) due to, for example, regional or temporal uneven distribution of communication demands. Particularly, a private network is often installed in a specific area such as a stadium. Therefore, for example, it is assumed that a situation in which it is difficult to provide communication with high communication performance remarkably occurs due to a rapid increase in the number of terminal devices caused by events or the like.

Therefore, the present embodiment solves the above problem as follows.

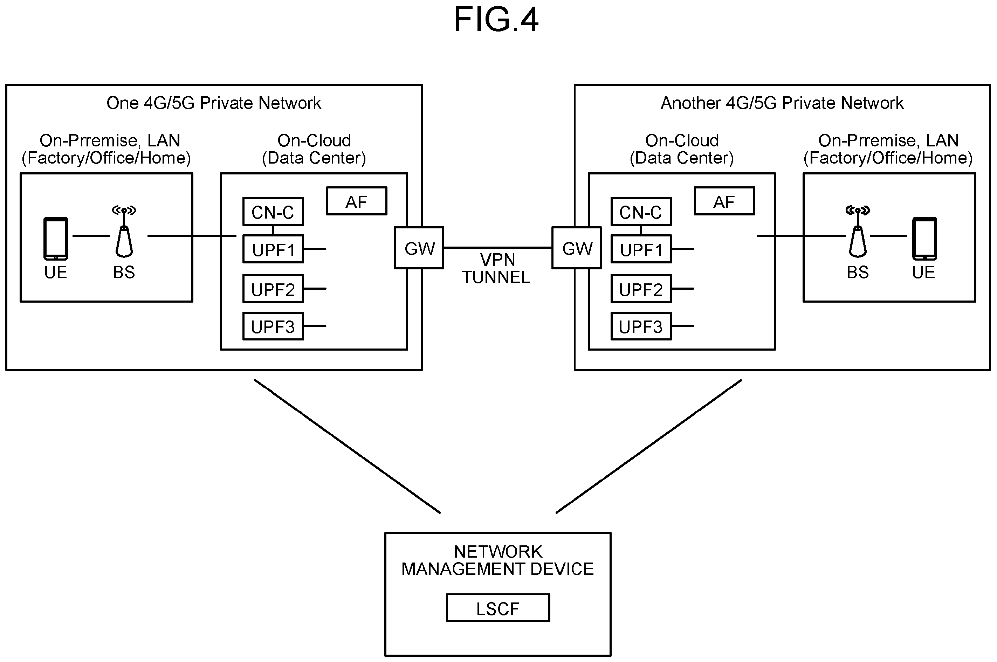

The communication system of the present embodiment is a system that provides a predetermined cellular network to a user. Here, the predetermined cellular network may include one or a plurality of private networks. FIG. 4 is a diagram illustrating a configuration example of a cellular network according to the present embodiment. In the example in FIG. 4, the predetermined cellular network includes a plurality of private networks. In addition, in the example in FIG. 4**,** a network management device connected to the plurality of private networks is disposed on a public network. The network management device has a function (localized service control function (LSCF)) of supporting communication performed in the plurality of private networks. The plurality of private networks is connected by secure communication (e.g., VPN tunnel).

The LSCF of the network management device detects that a predetermined condition regarding communication using the predetermined cellular network is satisfied in at least a part of a providing area of the predetermined cellular network. For example, the LSCF detects that the predetermined condition is satisfied in a partial area (hereinafter also referred to as a specific area.) of a predetermined cellular network providing area. For example, the LSCF detects that a communication quality of a plurality of terminal devices performing communication in the specific area falls below a predetermined criterion.

When it is detected that the predetermined condition is satisfied, the LSCF executes processing for enhancing a communication function related to communication performed in the area where it is detected that the predetermined condition is satisfied. For example, the LSCF provides a localized service for enhancing the communication function related to communication performed in the specific area when it is detected that the predetermined condition is satisfied in the specific area. Here, the localized service may be allocation of a new frequency resource or allocation of a computation resource of a new user plane function (UPF).

As an example, the LSCF may execute processing for causing a base station to which a plurality of terminal devices is connected to provide communication using another component carrier as the localized service when it is detected that the communication quality of the plurality of terminal devices falls below the predetermined criterion. As another example, when it is detected that the communication quality of the plurality of terminal devices falls below the predetermined criterion, the LSCF may execute processing for causing a base station different from the base station to which the plurality of terminal devices is connected to provide communication in the specific area as the localized service.

As a result, the communication system of the present embodiment can realize communication with high communication performance even when regional or temporal uneven distribution of communication demands occurs.

### <<2. Configuration of communication system>>

Although the outline of the present embodiment has been described above, before the present embodiment is described in detail, a configuration of a communication system 1 including an information processor of the present embodiment will be described. Note that the communication system can be rephrased as an information processing system.

### <2-1. Overall configuration of communication system>

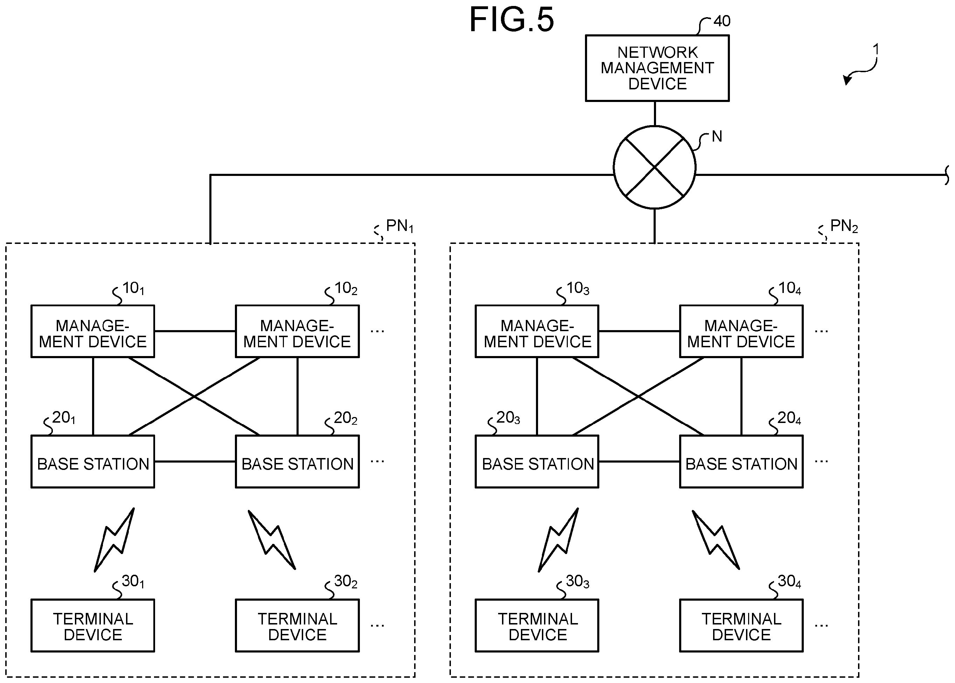

FIG. 5 is a diagram illustrating a configuration example of the communication system 1 according to the embodiment of the present disclosure. The communication system 1 includes a plurality of private networks PN. The private network PN is, for example, a private network using cellular wireless communication such as 4G or 5G. The plurality of private networks PN is connected via a network N.

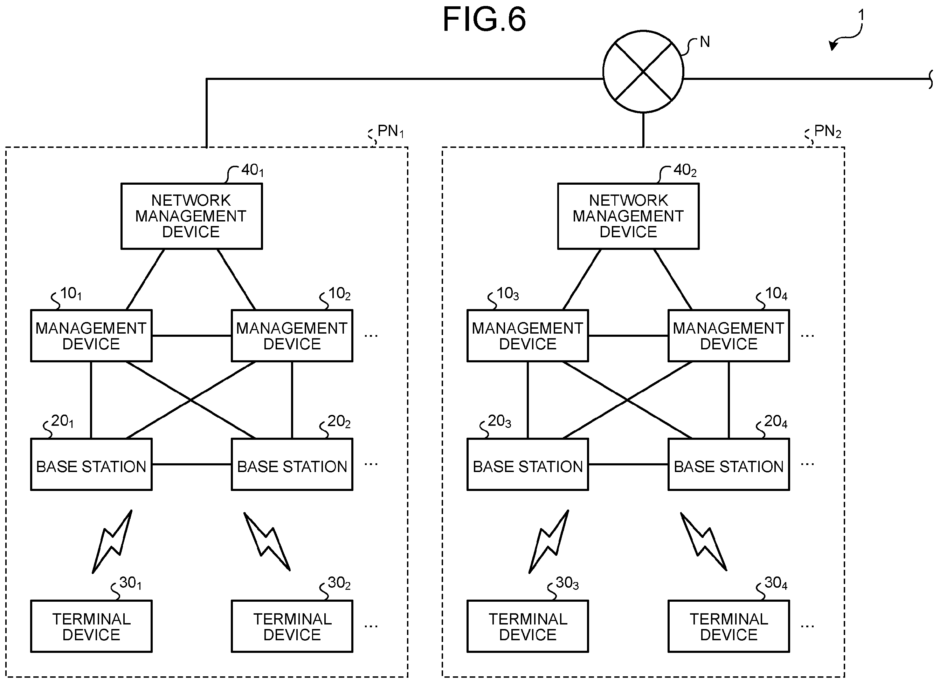

Furthermore, FIG. 6 is a diagram illustrating another configuration example of the communication system 1 according to the embodiment of the present disclosure. The communication system 1 illustrated in FIG. 6 also includes the plurality of private networks PN. The private network PN is, for example, a private network using the cellular wireless communication such as 4G or 5G. The plurality of private networks PN is connected via the network N.

Although only one network N is illustrated in the examples in FIGS. 5 and 6, a plurality of networks N may exist. Here, the network N is, for example, a public network such as the Internet. Note that the network N is not limited to the Internet, and may be, for example, a local area network (LAN), a wide area network (WAN), a cellular network, a fixed telephone network, or a regional Internet protocol (IP) network. The network N may include a wired network or a wireless network. In addition, the network N may include a core network. The core network may be an evolved packet core (EPC) or a 5G core network (5GC). Naturally, the network N may be a data network connected to the core network. The data network may also be a service network of a telecommunications carrier such as an IP multimedia subsystem (IMS) network. Furthermore, the data network may be a private network such as an intra-company network.

Each of the plurality of private networks PN is provided with a management device 10, a base station 20, and a terminal device 30. In the example in FIG. 5, the plurality of private networks PN is connected to a network management device 40 via the network N. In the example in FIG. 6, the network management device 40 is disposed in each of the plurality of private networks PN. In the examples in FIGS. 5 and 6, the plurality of private networks PN is provided, but the number of private networks PN may be one.

The communication system 1 provides a user with a wireless network capable of mobile communication by coordinated operation of wireless communication apparatuses configuring the communication system 1. The wireless network of the present embodiment includes, for example, a radio access network and a core network. Note that, in the present embodiment, the wireless communication apparatus is an apparatus having a function of wireless communication, and corresponds to the base station 20 and the terminal device 30 in the example in FIGS. 5 and 6.

The communication system 1 may include a plurality of management devices 10, a plurality of base stations 20, a plurality of terminal devices 30, and a plurality of network management devices 40. In the example in FIGS. 5 and 6, the communication system 1 includes management devices 10₁, 10₂, 10₃, 10₄, and so on as the management device 10, base stations 20₁, 20₂, 20₃, 20₄, and so on as the base station 20, and terminal devices 30₁, 30₂, 30₃, 30₄, and so on as the terminal device 30. In the example in FIG. 6, the communication system 1 includes network management devices 40₁, 40₂, and so on as the network management device 40.

Note that devices in the drawings may be considered as devices in a logical sense. In other words, a part of the devices in the drawing may be realized by a virtual machine (VM), a container, a docker, or the like, and they may be implemented on physically the same hardware.

The terminal device 30 may be connectable to the network using one communication path or may be connectable to the network using a plurality of communication paths. In this case, one or at least one of the plurality of communication paths may be a wireless communication path. For example, the communication path may be a wireless communication path (radio access network) between the terminal device 30 and the base station. Furthermore, the communication path may be a wireless communication path between the terminal device 30 and an access point. Naturally, the plurality of communication paths may include a wired communication path (e.g., wired LAN). Note that the communication path may be a network itself.

Note that the terminal device 30 may support a radio access technology (RAT) such as long term evolution (LTE), new radio (NR), Wi-Fi (registered trademark), or Bluetooth (registered trademark). In this case, the terminal device 30 may be configured to be able to use different radio access technologies (wireless communication systems). For example, the terminal device 30 may be configured to be able to use the NR and the Wi-Fi. Furthermore, the terminal device 30 may be configured to be able to use different cellular communication technologies (e.g., LTE and NR). The LTE and NR are types of cellular communication technology, and enable mobile communication of a terminal device by arranging a plurality of cellular areas covered by the base station. Note that a radio access method used by the communication system 1 is not limited to the LTE and NR, and may be another radio access method such as wideband code division multiple access (W-CDMA) or code division multiple access 2000 (cdma2000).

Note that, in the following description, the "LTE" includes LTE-Advanced (LTE-A), LTE-Advanced Pro (LTE-A Pro), and evolved universal terrestrial radio access (EUTRA). Still more, the NR includes new radio access technology (NRAT) and further EUTRA (FEUTRA). Note that a single base station may manage a plurality of cells. In the following description, a cell corresponding to the LTE is referred to as an LTE cell, and a cell corresponding to the NR is referred to as an NR cell.

The NR is the radio access technology of a next generation (fifth generation) of the LTE (fourth generation communication including LTE-Advanced and LTE-Advanced Pro). The NR is the radio access technology that can support various use cases including enhanced mobile broadband (eMBB), massive machine type communications (mMTC), and ultra-reliable and low latency communications (URLLC). The NR has been studied aiming at a technical framework corresponding to use scenarios, requirements, arrangement scenarios, and the like in these use cases.

Note that the terminal device 30 may be connectable to a network using the radio access technology (wireless communication system) other than LTE, NR, Wi-Fi, and Bluetooth. For example, the terminal device 30 may be connectable to a network by using low power wide area (LPWA) communication. Furthermore, the terminal device 30 may be connectable to a network using wireless communication of a unique standard.

Here, the LPWA communication is the wireless communication that enables low-power wide-area communication. For example, the LPWA radio is Internet of Things (IoT) wireless communication using a specified low power radio (e.g., 920 MHz band) or an industry-science-medical (ISM) band. Note that the LPWA communication used by the terminal device 30 may conform to the LPWA standards. Examples of the LPWA standards include ELTRES, ZETA, SIGFOX, LoRaWAN, and NB-Iot. It is apparent that the LPWA standards are not limited thereto, and may be other LPWA standards.

Note that one or the plurality of communication paths may include a virtual network. For example, the plurality of communication paths to which the terminal device 30 can be connected may include a virtual network such as a virtual local area network (VLAN) and a physical network such as an IP communication path. In this case, the terminal device 30 may perform route control based on a route control protocol such as open shortest path first (OSPF) or border gateway protocol (BGP).

In addition, the plurality of communication paths may include one or more overlay networks or one or more network slices.

The base station or a relay station configuring the communication system 1 may be a ground station or a non-ground station. The non-ground station may be a satellite station or an aircraft station. When the non-ground station is the satellite station, the communication system 1 may be a bent-pipe (transparent) type mobile satellite communication system.

In the present embodiment, the ground station (also referred to as a ground base station) refers to a base station (including a relay station) installed on the ground. Here, the "ground" is a ground in a broad sense including not only land but also underground, water, and underwater. Note that, in the following description, the "ground station" may be replaced with a "gateway".

Note that an LTE base station may be referred to as an evolved node B (eNodeB) or an eNB. Further, an NR base station may be referred to as a gNodeB or a gNB. In the LTE and NR, the terminal device (also referred to as a mobile station or a terminal) may be referred to as user equipment (UE). Note that the terminal device is a type of communication apparatus, and is also referred to as a mobile station or a terminal.

In the present embodiment, the concept of the communication apparatus includes not only a portable mobile device (terminal device) such as a mobile terminal but also a device installed in a structure or a mobile body. The structure or the mobile body itself may be regarded as the communication apparatus. In addition, the concept of the communication apparatus also includes the base station and the relay station in addition to the terminal device. The communication apparatus is one type of processor and information processor. Furthermore, the communication apparatus can be rephrased as a transmission device or a reception device.

Hereinafter, a configuration of each device configuring the communication system 1 will be specifically described. Note that the configuration of each device described below is merely an example. The configuration of each device may be different from the following configuration.

### <2-2. Configuration of management device>

Next, a configuration of the management device 10 will be described.

The management device 10 is an information processor (computer) that manages the wireless network. For example, the management device 10 is an information processor that manages communication of the base station 20. The management device 10 may be, for example, a device having a function as a mobility management entity (MME). The management device 10 may be a device having a function as an access and mobility management function (AMF) and/or a session management function (SMF). Naturally, functions of the management device 10 are not limited to the MME, the AMF, and the SMF. The management device 10 may be a device having a function as a network slice selection function (NSSF), an authentication server function (AUSF), a policy control function (PCF), or a unified data management (UDM). Furthermore, the management device 10 may be a device having a function as a home subscriber server (HSS). In addition, the management device 10 may include the localized service control function (LSCF) included in the network management device 40 and a function as the network management device 40.

Note that the management device 10 may have a function of the gateway. For example, the management device 10 may have a function as a serving gateway (S-GW) or a packet data network gateway (P-GW). In addition, the management device 10 may have a function of the user plane function (UPF). In this case, the management device 10 may have a plurality of UPFs. In addition, the management device 10 may have a function of a localized service control function (LSCF). The LSCF is a control function newly added in the present embodiment for providing localized services.

The core network includes a plurality of network functions, and each network function may be aggregated into one physical device or distributed to a plurality of physical devices. In other words, the management device 10 can be dispersedly arranged in a plurality of devices. Further, this distributed arrangement may be controlled to be performed dynamically. The base station 20 and the management device 10 configure one network, and provide a wireless communication service to the terminal device 30. The management device 10 is connected to the Internet, and the terminal device 30 can use various services provided via the Internet via the base station 20.

Note that the management device 10 is not necessarily a device configuring the core network. For example, it is assumed that the core network is a wideband code division multiple access (W-CDMA) or code division multiple access 2000 (cdma2000) core network. In this case, the management device 10 may be a device that functions as a radio network controller (RNC).

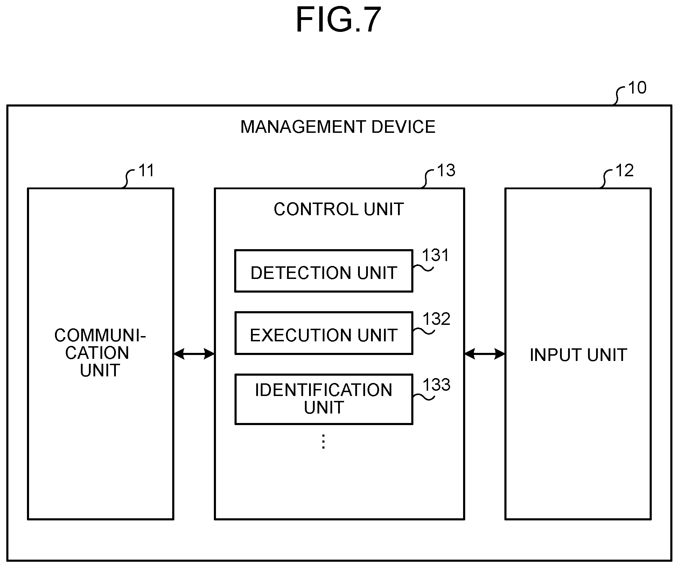

FIG. 7 is a diagram illustrating a configuration example of the management device 10 according to the embodiment of the present disclosure. The management device 10 includes a communication unit 11, an input unit 12, and a control unit 13. Note that the configuration illustrated in FIG. 7 is a functional configuration, and a hardware configuration may be different from the functional configuration. Furthermore, functions of the management device 10 may be implemented in a statistically or dynamically distributed manner in a plurality of physically separated structures. For example, the management device 10 may include a plurality of server devices.

The communication unit 11 is a communication interface for communicating with other devices. The communication unit 11 may be a network interface or a device connection interface. For example, the communication unit 11 may be a local area network (LAN) interface such as a network interface card (NIC), or may be a universal serial bus (USB) interface including a USB host controller and a USB port. Furthermore, the communication unit 11 may be a wired interface or a wireless interface. The communication unit 11 functions as a communication means of the management device 10. The communication unit 11 communicates with the base station 20 and the like under the control of the control unit 13.

The control unit 13 is a controller that controls each part of the management device 10. The control unit 13 is realized by, for example, a processor such as a central processing unit (CPU), a micro processing unit (MPU), or a graphics processing unit (GPU). For example, the control unit 13 is implemented by a processor executing various programs stored in the storage device inside the management device 10 using a random access memory (RAM) or the like as a work area. Note that the control unit 13 may be realized by an integrated circuit such as an application specific integrated circuit (ASIC) or a field programmable gate array (FPGA). Any of the CPU, the MPU, the GPU, the ASIC, and the FPGA can be regarded as the controller.

The input unit 12 is an input device that receives various inputs from outside. For example, the input unit 12 may be a data input interface for inputting various types of data related to the network. The data input interface may be a device connection interface such as a USB interface. For example, the input unit 12 may be an operation device for the user to perform various operations, such as a keyboard, a mouse, and an operation key.

As illustrated in FIG. 7, the control unit 13 includes a detection unit 131, an execution unit 132, and an identification unit 133. Each block configuring the control unit 13 (detection unit 131 to identification unit 133) are functional blocks indicating functions of the control unit 13. These functional blocks may be software blocks or hardware blocks. For example, each of the functional blocks described above may be one software module realized by software (microprogram), or may be one circuit block on a semiconductor chip (die). It is apparent that each functional block may be one processor or one integrated circuit. A configuration method of the functional blocks is arbitrary. Note that the control unit 13 may be configured by a functional unit different from the above-described functional block. Note that the operation of the control unit 13 may be the same as the operation of each block of a control unit 43 of the network management device 40.

In addition, the management device 10 may include a storage unit. The storage unit is a data readable/writable storage device such as a dynamic random access memory (DRAM), a static random access memory (SRAM), a flash memory, or a hard disk. The storage unit stores, for example, a connection state of the terminal device 30. For example, the storage unit stores a radio resource control (RRC) state, an EPS connection management (ECM) state, or a 5G system connection management (CM) state of the terminal device 30. The storage unit may function as a home memory that stores location information of the terminal device 30.

### <2-3. Configuration of base station>

Next, a configuration of the base station 20 will be described.

The base station 20 is a wireless communication apparatus that performs wireless communication with the terminal device 30. The base station 20 may be configured to wirelessly communicate with the terminal device 30 via the relay station, or may be configured to wirelessly communicate with the terminal device 30 directly.

The base station 20 is one type of the communication apparatus. The base station 20 is, for example, a device corresponding to a radio base station (e.g., base station, Node B, eNB, and gNB) or a radio access point. The base station 20 may be a wireless relay station. Furthermore, the base station 20 may be an optical extension device called a remote radio head (RRH) or a radio unit (RU). Furthermore, the base station 20 may be a receiving station such as a field pickup unit (FPU). Furthermore, the base station 20 may be an integrated access and backhaul (IAB) donor node or an IAB relay node that provides a radio access line and a radio backhaul line by time division multiplexing, frequency division multiplexing, or space division multiplexing.

Note that the radio access technology used by the base station 20 may be the cellular communication technology or the wireless LAN technology. Obviously, the radio access technology used by the base station 20 is not limited thereto, and may be other radio access technologies. For example, the radio access technology used by the base station 20 may be a low power wide area (LPWA) communication technology. In addition, the wireless communication used by the base station 20 may be wireless communication using millimeter waves. Furthermore, the wireless communication used by the base station 20 may be wireless communication using radio waves or wireless communication (optical) using infrared rays or visible light. The base station 20 may be capable of non-orthogonal multiple access (NOMA) communication with the terminal device 30. Here, the NOMA communication is communication using a non-orthogonal resource (transmission, reception, or both). Note that the base station 20 may be able to perform the NOMA communication with another base station 20.

Note that the base stations 20 may be capable of communicating with each other via a base station-core network interface (e.g., NG Interface and S1 Interface). This interface may be either wired or wireless. Furthermore, the base stations may be capable of communicating with each other via an inter-base station interface (e.g., Xn interface, X2 interface, S1 interface, and F1 interface). This interface may be either wired or wireless.

Note that the concept of the base station includes not only a donor base station but also a relay base station (also referred to as the relay station). For example, the relay base station may be any one of RF repeater, smart repeater, and intelligent surface. In addition, the concept of the base station includes not only a structure having a function of the base station but also a device installed in the structure.

The structure is, for example, a building such as a high-rise building, a house, a steel tower, a station facility, an airport facility, a harbor facility, an office building, a school building, a hospital, a factory, a commercial facility, or a stadium. Note that the concept of the structure includes not only a building but also a non-building structure such as a tunnel, a bridge, a dam, a wall, or an iron pillar, and equipment such as a crane, a gate, or a windmill. In addition, the concept of the structure includes not only a structure on land (on the ground in a narrow sense) or underground, but also a structure on water such as a platform or a megafloat, and a structure under water such as a marine observation facility. The base station can be rephrased as the information processor.

The base station 20 may be a donor station or a relay station. Furthermore, the base station 20 may be a fixed station or a mobile station. The mobile station is a wireless communication apparatus (e.g., base station) configured to be movable. In this case, the base station 20 may be a device installed in the mobile body or may be the mobile body itself. For example, the relay station having mobility can be regarded as the base station 20 as the mobile station. In addition, a device that is originally a device having the mobility and has a function of the base station (at least a part of the function of the base station), such as a vehicle, an unmanned aerial vehicle (UAV) as typified by a drone, or a smartphone, also corresponds to the base station 20 as the mobile station.

Here, the mobile body may be a mobile terminal such as a smartphone or a mobile phone. In addition, the mobile body may be a mobile body that travels on land (ground in a narrow sense) (e.g., vehicle including an automobile, a bicycle, a bus, a truck, a motorcycle, a train, and a linear motor car) or a mobile body (e.g., subway) that travels underground (e.g., inside tunnel). In addition, the mobile body may be a mobile body that travels on water (e.g., ship such as a passenger ship, a cargo ship, or a hovercraft) or a mobile body that moves under water (e.g., submersibles such as a submersible vessel, a submarine, and an unmanned submarine). Note that the mobile body may be a mobile body (e.g., aircraft such as an airplane, an airship, or a drone) that moves in the atmosphere.

Furthermore, the base station 20 may be a ground base station device (ground station) installed on the ground. For example, the base station 20 may be a base station installed in a structure on the ground, or may be a base station installed in a mobile body moving on the ground. More specifically, the base station 20 may be an antenna installed in a structure such as a building and a signal processing device connected to the antenna. Obviously, the base station 20 may be the structure or the mobile body itself. The "ground" in a broad sense includes not only land (ground in a narrow sense) but also underground, on water, and under water. Note that the base station 20 is not limited to the ground base station. For example, when the communication system 1 is a satellite communication system, the base station 20 may be an aircraft station. From the perspective of the satellite station, the aircraft station located on the earth is a ground station.

Note that the base station 20 is not limited to the ground station. The base station 20 may be a non-ground base station (non-ground station) capable of floating in the air or space. For example, the base station 20 may be an aircraft station or a satellite station.

The satellite station is a satellite station capable of floating outside the atmosphere. The satellite station may be a device mounted on a space mobile body such as an artificial satellite, or may be the space mobile body itself. The space mobile body is a mobile body that moves outside the atmosphere. Examples of the space mobile body include artificial bodies such as an artificial satellite, a spacecraft, a space station, and a probe. The satellite serving as the satellite station may be any of a low earth orbiting (LEO) satellite, a medium earth orbiting (MEO) satellite, a geostationary earth orbiting (GEO) satellite, and a highly elliptical orbiting (HEO) satellite. Obviously, the satellite station may be a device mounted on the LEO satellite, the MEO satellite, the GEO satellite, or the HEO satellite.

The aircraft station is a wireless communication apparatus capable of floating in the atmosphere, such as an aircraft. The aircraft station may be a device mounted on an aircraft or the like, or may be the aircraft itself. Note that the concept of the aircraft includes not only a heavy aircraft such as an airplane and a glider but also a light aircraft such as a balloon and an airship. In addition, the concept of the aircraft includes not only heavy and light aircrafts but also a rotorcraft such as a helicopter and an autogyroscope. Note that the aircraft station (or the aircraft on which an aircraft station is mounted) may be an unmanned aerial vehicle such as a drone.

Note that the concept of the unmanned aerial vehicle also includes an unmanned aircraft system (UAS) and a tethered UAS. The concept of the unmanned aerial vehicle also includes lighter than air (LTA) UAS and heavier than air (HTA) UAS. Furthermore, the concept of unmanned aerial vehicles also includes high altitude UAS platforms (HAPs).

A coverage of the base station 20 may be large such as a macro cell to small such as a pico cell. It is apparent that a magnitude of the coverage of the base station 20 may be extremely small such as a femto cell. Further, the base station 20 may have a beamforming capability. In this case, the base station 20 may form a cell or a service area for each beam.

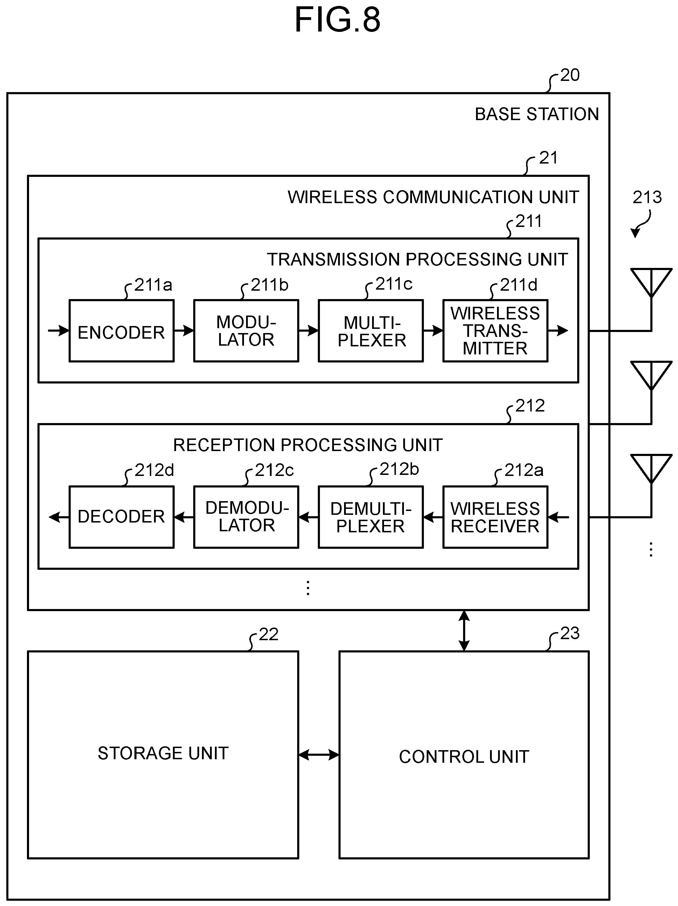

FIG. 8 is a diagram illustrating a configuration example of the base station 20 according to the embodiment of the present disclosure. The base station 20 includes a wireless communication unit 21, a storage unit 22, and a control unit 23. Note that the configuration illustrated in FIG. 8 is a functional configuration, and a hardware configuration may be different from the functional configuration. Furthermore, functions of the base station 20 may be implemented in a distributed manner in a plurality of physically separated configurations.

The wireless communication unit 21 is a signal processing unit for wirelessly communicating with another wireless communication apparatus (e.g., terminal device 30). The wireless communication unit 21 operates under the control of the control unit 23. The wireless communication unit 21 corresponds to one or a plurality of radio access methods. For example, the wireless communication unit 21 supports both NR and LTE. The wireless communication unit 21 may be compatible with W-CDMA or cdma2000 in addition to the NR or LTE. Furthermore, the wireless communication unit 21 may support an automatic retransmission technology such as hybrid automatic repeat request (HARQ).

The wireless communication unit 21 includes a transmission processing unit 211, a reception processing unit 212, and an antenna 213. The wireless communication unit 21 may include a plurality of transmission processing units 211, a plurality of reception processing units 212, and a plurality of antennas 213. When the wireless communication unit 21 supports the plurality of radio access methods, each part of the wireless communication unit 21 can be configured individually for each of the radio access methods. For example, the transmission processing unit 211 and the reception processing unit 212 may be individually configured for the LTE and the NR. Furthermore, the antenna 213 may include a plurality of antenna elements (e.g., a plurality of patch antennas). In this case, the wireless communication unit 21 may be configured to be beamformable. The wireless communication unit 21 may be configured to be able to perform polarization beamforming using vertically polarized waves (V-polarized waves) and horizontally polarized waves (H-polarized waves).

The transmission processing unit 211 performs transmission processing of downlink control information and downlink data. The transmission processing unit 211 encodes the downlink control information and the downlink data input from the control unit 23 using an encoding system such as block encoding, convolutional encoding, or turbo encoding. Here, the encoding may be performed by polar code encoding or low density parity check code (LDPC code) encoding. Then, the transmission processing unit 211 modulates coded bits by a predetermined modulation scheme such as BPSK, QPSK, 16QAM, 64QAM, or 256QAM. In this case, signal points on constellation do not necessarily have to be equidistant. The constellation may be a non-uniform constellation (NUC). The transmission processing unit 211 multiplexes a modulation symbol of each channel and a downlink reference signal, and arranges a multiplexed result in a predetermined resource element. Then, the transmission processing unit 211 performs various types of signal processing on a multiplexed signal. For example, the transmission processing unit 211 performs processing such as conversion into a frequency domain by fast Fourier transform, addition of a guard interval, generation of a baseband digital signal, conversion into an analog signal, quadrature modulation, up-conversion, removal of an extra frequency component, and power amplification. A signal generated by the transmission processing unit 211 is transmitted from the antenna 213.

The reception processing unit 212 processes an uplink signal received via the antenna 213. The reception processing unit 212 performs, with respect to the uplink signal, down-conversion, removal of an unnecessary frequency component, control of an amplification level, quadrature demodulation, conversion into a digital signal, removal of a guard interval (cyclic prefix), extraction of a frequency domain signal by fast Fourier transform, and the like. In this case, the reception processing unit 212 separates an uplink channel, such as a physical uplink shared channel (PUSCH) and a physical uplink control channel (PUCCH), and an uplink reference signal from a signal after the above processing is performed. The reception processing unit 212 demodulates a received signal using a modulation scheme such as binary phase shift keying (BPSK) or quadrature phase shift keying (QPSK) with respect to a modulation symbol of the uplink channel. The modulation scheme used for demodulation may be 16-quadrature amplitude modulation (16QAM), 64QAM, or 256QAM. In this case, signal points on constellation do not necessarily have to be equidistant. The constellation may be a non-uniform constellation (NUC). The reception processing unit 212 decodes encoded bits of a demodulated uplink channel. Decoded uplink data and uplink control information are output to the control unit 23.

The antenna 213 is an antenna device (antenna unit) that mutually converts a current and a radio wave. The antenna 213 may include one antenna element (e.g., one patch antenna) or may include a plurality of antenna elements (e.g., a plurality of patch antennas). In a case where the antenna 213 includes a plurality of antenna elements, the wireless communication unit 21 may be configured to be beamformable. For example, the wireless communication unit 21 may be configured to generate a directional beam by controlling the directivity of a radio signal using the plurality of antenna elements. Note that the antenna 213 may be a dual-polarized antenna. When the antenna 213 is a dual-polarized antenna, the wireless communication unit 21 may use vertically polarized waves (V-polarized waves) and horizontally polarized waves (H-polarized waves) to transmit radio signals. Then, the wireless communication unit 21 may control directivity of the radio signal transmitted using the vertically polarized wave and the horizontally polarized wave. Furthermore, the wireless communication unit 21 may transmit and receive spatially multiplexed signals via a plurality of layers including the plurality of antenna elements.

The storage unit 22 is a storage device capable of reading and writing data, such as a DRAM, an SRAM, a flash memory, or a hard disk. The storage unit 22 functions as a storage means of the base station 20.

The control unit 23 is a controller that controls each unit of the base station 20. The control unit 23 is realized by, for example, a processor such as the CPU or the MPU. For example, the control unit 23 is realized by a processor executing various programs stored in the storage device inside the base station 20 using the RAM or the like as a work area. Note that the control unit 23 may be realized by an integrated circuit such as the ASIC or the FPGA. Any of the CPU, the MPU, the ASIC, and the FPGA can be regarded as the controller. Furthermore, the control unit 23 may be realized by the GPU in addition to or instead of the CPU.

In some embodiments, the concept of a base station may consist of a collection of multiple physical or logical devices. For example, in this embodiment, the base station may be distinguished into a plurality of devices such as a baseband unit (BBU) and a radio unit (RU). Then, the base station may be interpreted as an assembly of the plurality of devices. In addition, the base station may be either or both of the BBU and the RU. The BBU and the RU may be connected by a predetermined interface (e.g., enhanced common public radio interface (eCPRI)). The RU may be rephrased as a remote radio unit (RRU) or a radio DoT (RD). Furthermore, the RU may correspond to a gNB distributed unit (gNB-DU) described later. Further, the BBU may correspond to a gNB central unit (gNB-CU) described later. Alternatively, the RU may be a wireless device connected to the gNB-DU described later. The gNB-CU, the gNB-DU, and the RU connected to the gNB-DU may be configured to conform to an open radio access network (O-RAN). Further, the RU may be a device integrally formed with the antenna. An antenna (e.g., antenna integrally formed with RU) included in the base station may adopt an advanced antenna system and support MIMO (e.g., full dimension (FD)-MIMO) or beamforming. Furthermore, the antenna included in the base station may include, for example, 64 transmission antenna ports and 64 reception antenna ports.

In addition, the antenna mounted on the RU may be an antenna panel including one or more antenna elements, and the RU may be mounted with one or more antenna panels. For example, the RU may be mounted with two antenna panels of a horizontally polarized antenna panel and a vertically polarized antenna panel, or two antenna panels of a clockwise circularly polarized antenna panel and a counterclockwise circularly polarized antenna panel. In addition, the RU may form and control an independent beam for each antenna panel.

Note that a plurality of base stations may be connected to each other. The one or more base stations may be included in a radio access network (RAN). In this case, the base station may be simply referred to as a RAN, a RAN node, an access network (AN), or an AN node. Note that the RAN in the LTE is sometimes referred to as an enhanced universal terrestrial RAN (EUTRAN). In addition, the RAN in the NR may be referred to as NGRAN. In addition, the RAN in the W-CDMA (UMTS) is sometimes referred to as UTRAN.

Note that an LTE base station may be referred to as an evolved node B (eNodeB) or an eNB. In this case, the EUTRAN includes one or more eNodeBs (eNBs). Further, an NR base station may be referred to as a gNodeB or a gNB. In this case, the NGRAN includes one or more gNBs. The EUTRAN may include the gNB (en-gNB) connected to the core network (EPC) in an LTE communication system (EPS). Similarly, the NGRAN may include an ng-eNB connected to a core network 5GC in a 5G communication system (5GS).

When the base station is the eNB, the gNB, or the like, the base station may be referred to as a 3GPP access. In addition, when the base station is the radio access point, the base station may be referred to as a non-3GPP access. Further, the base station may be an optical extension device called a remote radio head (RRH) or a radio unit (RU). Furthermore, in a case where the base station is the gNB, the base station may be a combination of the gNB-CU and the gNB-DU described above, or may be any one of the gNB-CU and the gNB-DU.

Here, the gNB-CU hosts a plurality of upper layers (e.g., radio resource control (RRC), service data adaptation protocol (SDAP), and packet data convergence protocol (PDCP)) in an access stratum for communication with the UE. On the other hand, the gNB-DU hosts a plurality of lower layers (e.g.**,** radio link control (RLC), medium access control (MAC), and physical layer (PHY) in an access stratum. In other words, among messages/information to be described later, RRC signaling (semi-static notification) may be generated by the gNB-CU, while MAC CE and DCI (dynamic notification) may be generated by the gNB-DU. Alternatively, in the RRC configuration (semi-static notification), for example, some configurations such as IE: cellGroupConfig may be generated by the gNB-DU, and the remaining configurations may be generated by the gNB-CU. These configurations may be transmitted and received through an F1 interface described later.

Note that the base station may be configured to be able to communicate with another base station. For example, when a plurality of base stations is the eNBs or a combination of the eNB and the en-gNB, the base stations may be connected by an X2 interface. Furthermore, in a case where a plurality of base stations are the gNBs or a combination of the gn-eNB and the gNB, the devices may be connected by an Xn interface. Furthermore, in a case where a plurality of base stations is a combination of the gNB-CU and the gNB-DU, the devices may be connected by the above-described F1 interface. A message/information (e.g., RRC signaling, MAC control element (MAC CE), or DCI) to be described later may be transmitted between a plurality of base stations, for example, via the X2 interface, the Xn interface, or the F1 interface.

The cell provided by the base station is referred to as, for example, a serving cell. The serving cell may include a primary cell (PCell) and a secondary cell (SCell). When dual connectivity is configured for the UE (e.g., terminal device 30), the PCell provided by a master node (MN) and zero or one or more SCells may be referred to as a master cell group. Examples of the dual connectivity include EUTRA-EUTRA dual connectivity, EUTRA-NR dual connectivity (ENDC), EUTRA-NR dual connectivity with 5GC, NR-EUTRA dual connectivity (NEDC), and NR-NR dual connectivity.

Further, the serving cell may include a primary secondary cell (PSCell) or primary SCG cell. In other words, when the dual connectivity is set to the UE, the PSCell provided by the secondary node (SN) and zero or one or more SCells are referred to as a secondary cell group (SCG). Unless specially configured (e.g., PUCCH on SCell), a physical uplink control channel (PUCCH) is transmitted in the PCell and the PSCell, but is not transmitted in the SCell. In addition, a radio link failure is also detected in the PCell and the PSCell, but is not detected in the SCell (may not be detected). As described above, since the PCell and the PSCell have a special role in the serving cell, they are also referred to as a special cell (SpCell).

In one cell, one downlink component carrier and one uplink component carrier may be associated. Further, a system bandwidth corresponding to one cell may be divided into a plurality of bandwidth parts (BWP). In this case, one or more BWPs may be set to the UE, and the UE may use one BWP as an active BWP. In addition, radio resources that can be used by the terminal device 30 (e.g., frequency bandwidth, numerology (subcarrier spacing), and slot configuration) may be different for each cell, each component carrier, or each BWP.

### <2-4. Configuration of terminal device>

Next, a configuration of the terminal device 30 will be described. The terminal device 30 can be rephrased as user equipment (UE) 30.

Any form of computer can be employed as the terminal device 30. The terminal device 30 may be a mobile terminal such as a mobile phone, a smart device (smartphone or tablet), a personal digital assistant (PDA), or a notebook PC. Furthermore, the terminal device 30 may be an imaging device (e.g., camcorder) having a communication function. Furthermore, the terminal device 30 may be a motorcycle, a mobile relay car, or the like on which the communication device such as the FPU is mounted. Furthermore, the terminal device 30 may be a machine-to-machine (M2M) device or an Internet of Things (IoT) device. Still more, the terminal device 30 may be a wearable device such as a smart watch.

Still more, the terminal device 30 may be an xR device such as an augmented reality (AR) device, a virtual reality (VR) device, and a mixed reality (MR) device. At this time, the xR device may be an eyewear device such as AR glasses and MR glasses, or may be a head-mounted device such as a VR head-mounted display. When the terminal device 30 is the xR device, the terminal device 30 may be a standalone device including only a user wearing part (e.g., eyewear part). Furthermore, the terminal device 30 may be a terminal interlocking device including a user wearing part (e.g., eyewear part) and a terminal part (e.g., smart device) interlocked with the user wearing part.

Note that the terminal device 30 may be configured to be connectable to a plurality of communication paths. For example, the terminal device 30 may be configured to be connectable to two communication paths of the Wi-Fi (registered trademark) and the cellular network. The terminal device 30 may be connectable to a plurality of cellular networks. At this time, the plurality of cellular networks may be associated with different subscriber identity modules (SIMs).

Note that the terminal device 30 may be configured to be able to switch and use a plurality of SIM cards. For example, the terminal device 30 may be compatible with dual SIM or triple SIM. Obviously, the terminal device 30 may be configured to be able to insert more than three SIM cards. Furthermore, the terminal device 30 may be a remote SIM provisioning (RSP). For example, the terminal device 30 may be compatible with an embedded SIM (eSIM). The RSP-compatible terminal device can rewrite information regarding wireless communication (hereinafter referred to as a profile) without replacing a SIM card.

Note that the terminal device 30 may be capable of performing NOMA communication with the base station 20. Furthermore, the terminal device 30 may be capable of using an automatic retransmission technology such as HARQ when communicating with the base station 20. Further, the terminal device 30 may be capable of performing sidelink communication with another terminal device 30. The terminal device 30 may also be capable of using an automatic retransmission technology such as HARQ when performing the sidelink communication. Note that the terminal device 30 may also be capable of the NOMA communication in communication (sidelink) with other terminal devices 30. Furthermore, the terminal device 30 may be capable of performing LPWA communication with other communication apparatuses (e.g., base station 20 and other terminal devices 30). Furthermore, wireless communication used by the terminal device 30 may be wireless communication using millimeter waves. Note that the radio communication (including the sidelink communication) used by the terminal device 30 may be radio communication using radio waves or radio communication (optical) using infrared rays or visible light.

Furthermore, the terminal device 30 may be a mobile device. The mobile device is a mobile wireless communication apparatus. In this case, the terminal device 30 may be the radio communication apparatus installed in the mobile body or may be the mobile body itself. For example, the terminal device 30 may be a vehicle that moves on a road, such as an automobile, a bus, a truck, or a motorcycle, or a wireless communication apparatus mounted on the vehicle. Note that the mobile body may be a mobile terminal, or may be the mobile body that travels on land (on the ground in a narrow sense), underground, on water, or under water. Furthermore, the mobile body may be a mobile body that travels in the atmosphere, such as a drone or a helicopter, or may be a mobile body that travels outside the atmosphere such as an artificial satellite.

The terminal device 30 may be simultaneously connected to a plurality of base stations or a plurality of cells to perform communication. For example, when one base station supports a communication area via a plurality of cells (e.g., pCell and sCell), it is possible to bundle the plurality of cells and communicate between the base station 20 and the terminal device 30 by a carrier aggregation (CA) technology, a dual connectivity (DC) technology, or a multi-connectivity (MC) technology. Alternatively, the terminal device 30 and the plurality of base stations 20 can communicate with each other by a coordinated multipoint transmission and reception (CoMP) technology via cells of different base stations 20.

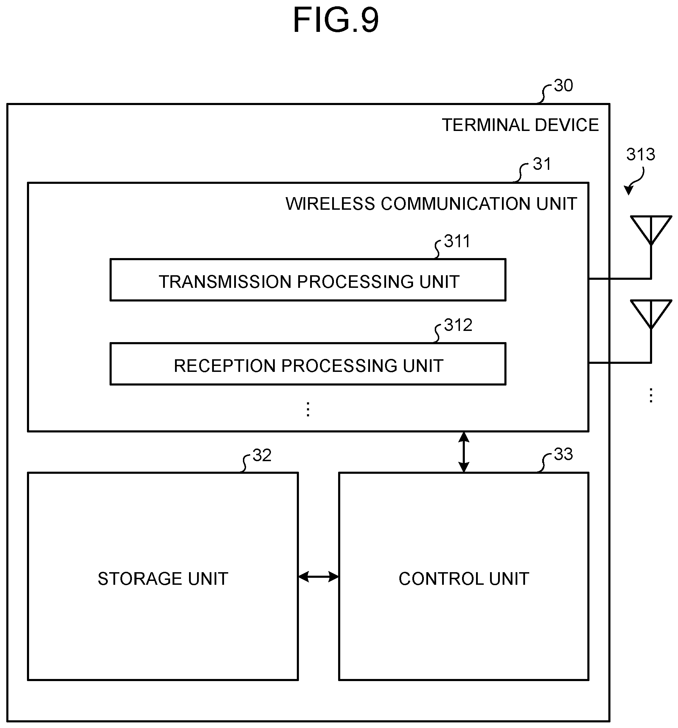

FIG. 9 is a diagram illustrating a configuration example of the terminal device 30 according to the embodiment of the present disclosure. The terminal device 30 includes a wireless communication unit 31, a storage unit 32, and a control unit 33. Note that the configuration illustrated in FIG. 9 is a functional configuration, and a hardware configuration may be different from the functional configuration. Furthermore, functions of the terminal device 30 may be implemented in a distributed manner in a plurality of physically separated structures.

The wireless communication unit 31 is a signal processing unit for wirelessly communicating with other wireless communication apparatuses (e.g., base station 20 and other terminal devices 30). The wireless communication unit 31 operates under the control of the control unit 33. The wireless communication unit 31 includes a transmission processing unit 311, a reception processing unit 312, and an antenna 313. Configurations of the wireless communication unit 31, the transmission processing unit 311, the reception processing unit 312, and the antenna 313 may be similar to those of the wireless communication unit 21, the transmission processing unit 211, the reception processing unit 212, and the antenna 213 of the base station 20. Further, the wireless communication unit 31 may be configured to be beamformable similarly to the wireless communication unit 21. Further, similarly to the wireless communication unit 21, the wireless communication unit 31 may be configured to be capable of transmitting and receiving spatially multiplexed signals.

The storage unit 32 is a storage device capable of reading and writing data such as the DRAM, the SRAM, the flash memory, or the hard disk. The storage unit 32 functions as a storage means of the terminal device 30.

The control unit 33 is a controller that controls each part of the terminal device 30. The control unit 33 is realized by, for example, a processor such as the CPU or the MPU. For example, the control unit 33 is realized by a processor executing various programs stored in a storage device inside the terminal device 30 using the RAM or the like as a work area. Note that the control unit 33 may be realized by an integrated circuit such as the ASIC or the FPGA. Any of the CPU, the MPU, the ASIC, and the FPGA can be regarded as the controller. Furthermore, the control unit 33 may be realized by the GPU in addition to or instead of the CPU.

### <2-5. Configuration of network management device>

Next, a configuration of the network management device 40 will be described.

The network management device 40 is an information processor (computer) including a control function (localized service control function (LSCF)) newly prepared in the present embodiment for providing localized services. For example, the network management device 40 is a central management server installed by an administrator who manages the private network.

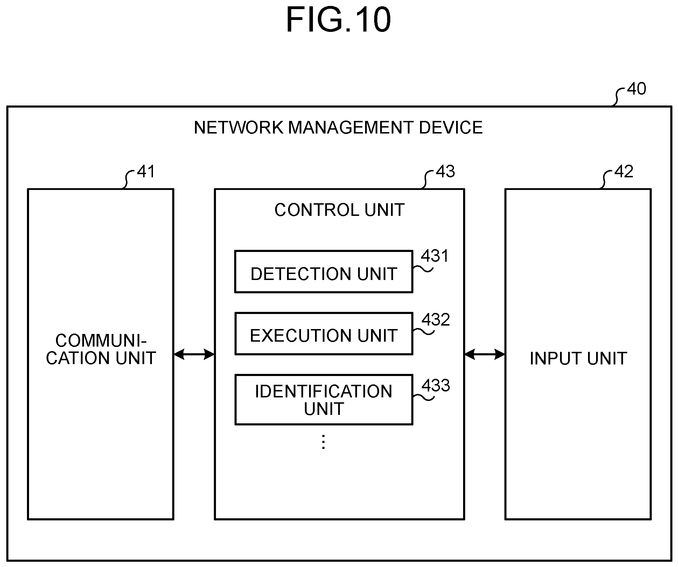

FIG. 10 is a diagram illustrating a configuration example of the network management device 40 according to the embodiment of the present disclosure. The network management device 40 includes a communication unit 41, an input unit 42, and a control unit 43. Note that the configuration illustrated in FIG. 10 is a functional configuration, and a hardware configuration may be different from the functional configuration. Furthermore, functions of the network management device 40 may be implemented in a statistically or dynamically distributed manner in a plurality of physically separated structures. For example, the network management device 40 may include a plurality of server devices.

The communication unit 41 is a communication interface for communicating with other devices. The communication unit 41 may be a network interface or a device connection interface. For example, the communication unit 41 may be a local area network (LAN) interface such as a network interface card (NIC), or may be a universal serial bus (USB) interface including a USB host controller and a USB port. Furthermore, the communication unit 41 may be a wired interface or a wireless interface. The communication unit 41 functions as a communication means of the network management device 40. The communication unit 41 communicates with the management device 10 according to the control of the control unit 43.

The input unit 42 is an input device that receives various inputs from outside. For example, the input unit 42 may be a data input interface for inputting various types of data related to the network. The data input interface may be a device connection interface such as a USB interface. Furthermore, the input unit 42 may be an operation device for the user to perform various operations, such as a keyboard, a mouse, and operation keys.

The control unit 43 is a controller that controls each unit of the network management device 40. The control unit 43 is realized by, for example, a processor such as the CPU, MPU, or GPU. For example, the control unit 43 is realized by the processor executing various programs stored in the storage device inside the network management device 40 using a RAM or the like as a work area. Note that the control unit 43 may be realized by an integrated circuit such as the ASIC or the FPGA. Any of the CPU, the MPU, the GPU, the ASIC, and the FPGA can be regarded as the controller.

As illustrated in FIG. 10, the control unit 43 includes a detection unit 431, an execution unit 432, and an identification unit 433. Each block configuring the control unit 13 (detection unit 431 to identification unit 433) are functional blocks indicating functions of the control unit 13. These functional blocks may be software blocks or hardware blocks. For example, each of the functional blocks described above may be one software module realized by software (microprogram), or may be one circuit block on a semiconductor chip (die). It is apparent that each functional block may be one processor or one integrated circuit. A configuration method of the functional blocks is arbitrary. Note that the control unit 43 may be configured by a functional unit different from the above-described functional block. Note that the operation of the control unit 43 may be the same as the operation of each block (detection unit 131 to identification unit 133) of the control unit 13 of the management device 10.

In addition, the network management device 40 may include a storage unit. The storage unit is a storage device capable of reading and writing data such as the DRAM, the SRAM, the flash memory, or the hard disk.

### <<3. Network architecture>>

The configuration of the communication system 1 has been described above. Next, a network architecture applicable to the communication system 1 of the present embodiment will be described.

### <3-1. Configuration example of 5G network architecture>

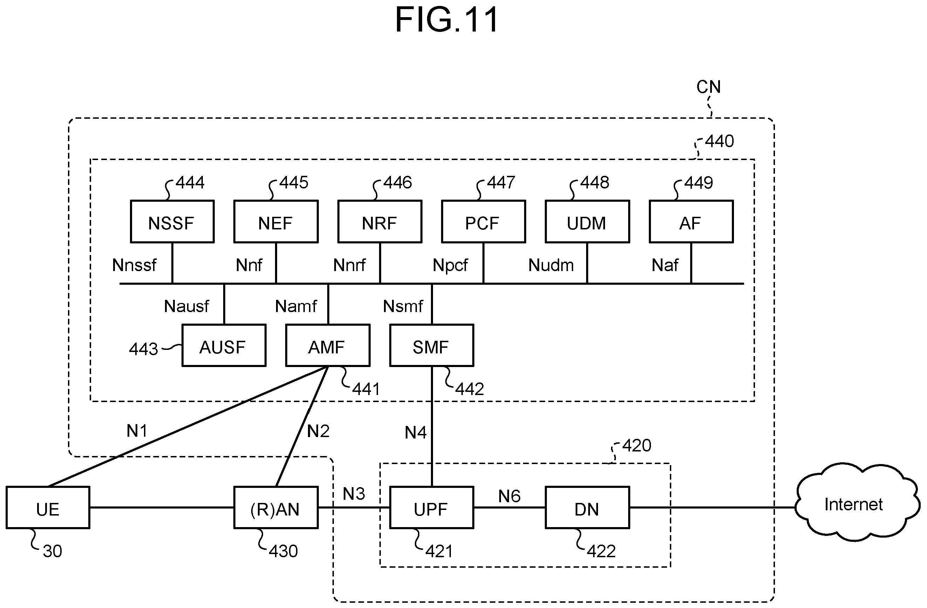

First, an architecture of a fifth generation mobile communication system (5G) will be described as an example of the core network CN of the communication system 1. FIG. 11 is a diagram illustrating an example of a 5G architecture. A 5G core network CN is also referred to as a 5G core/next generation core (5GC/NGC). Hereinafter, the 5G core network CN is also referred to as the 5GC/NGC. The core network CN is connected to the user equipment (UE) 30 via a (R)AN 430. The UE 30 is, for example, the terminal device 30.

Note that the core network CN illustrated in FIG. 11 does not include a localized service control function (LSCF), but the core network CN may include the LSCF as one of the network functions. Obviously, the LSCF may be a network function arranged outside the core network CN.

The (R)AN 430 has a function of enabling connection to a radio access network (RAN) and connection to an access network (AN) other than the RAN. The (R)AN 430 includes a base station called the gNB or the ng-eNB.

The core network CN mainly performs connection permission and session management when the UE 30 is connected to the network. The core network CN includes a user plane function group 420 and a control plane function group 440.

The user plane function group 420 includes a user plane function (UPF) 421 and a data network (DN) 422. The UPF 421 has a function of user plane processing. The UPF 421 includes a routing/forwarding function of data handled in the user plane. A DN 422 has a function of providing a function, such as a mobile network operator (MNO), that provides a connection to an operator's own service, an Internet connection, or a connection to a third party service. As described above, the user plane function group 420 plays a role of a gateway serving as a boundary between the core network CN and the Internet.

The control plane function group 440 includes an access management function (AMF) 441, a session management function (SMF) 442, an authentication server function (AUSF) 443, a network slice selection function (NSSF) 444, a network exposure function (NEF) 445, a network repository function (NRF) 446, a policy control function (PCF) 447, a unified data management (UDM) 448, and an application function (AF) 449.

The AMF 441 has functions such as registration processing, connection management, and mobility management of the UE 30. The SMF 442 has functions such as session management and IP assignment and management of the UE 30. The AUSF 443 has an authentication function. The NSSF 444 has a function related to selection of the network slice. The NEF 445 has a function of providing network function capabilities and events to a third party, an AF 449, and an edge computing function.

The NRF 446 has a function of finding a network function and holding a profile of the network function. The PCF 447 has a function of policy control. A UDM 448 has functions of generating 3GPP AKA authentication information and processing a user ID. The AF 449 has a function of interacting with the core network to provide a service.

For example, the control plane function group 440 acquires information from the UDM 448 in which subscriber information of the UE 30 is stored, and determines whether or not the UE 30 may be connected to the network. The control plane function group 440 uses contract information of the UE 30 and a key for encryption included in the information acquired from the UDM 448 for determination. In addition, the control plane function group 440 generates the key for encryption and the like.

In other words, for example, the control plane function group 440 determines whether or not the network can be connected according to whether or not information on the UE 30 associated with a subscriber number called an international mobile subscriber identity (IMSI) is stored in the UDM 448. Note that the IMSI is stored in, for example, a subscriber identity module (SIM) card in the UE 30.

Here, Namf is a service-based interface provided by the AMF 441, and Nsmf is a service-based interface provided by the SMF 442. In addition, Nnef is a service-based interface provided by the NEF 445, and Npcf is a service-based interface provided by the PCF 447. Nudm is a service-based interface provided by the UDM 448, and Naf is a service-based interface provided by the AF 449. Nnrf is a service-based interface provided by the NRF 446, and Nnssf is a service-based interface provided by the NSSF 444. Nausf is a service-based interface provided by the AUSF 443. Each of these network functions (NFs) exchanges information with another NF via each service-based interface.

In addition, N1 illustrated in FIG. 11 is a reference point between the UE 30 and the AMF 441, and N2 is a reference point between the RAN/AN 430 and the AMF 441. N4 is a reference point between the SMF 442 and the UPF 421, and information is exchanged between these network functions (NFs).

As described above, in the core network CN, an interface for transmitting information and controlling functions via an application programming interface (API) called a service-based interface is prepared.

The API specifies a resource and enables to perform GET (resource acquisition), POST (resource creation and data addition), PUT (resource creation and resource update), DELETE (resource deletion), and the like on the resource. These functions are generally used, for example, in a technical field related to the web.

For example, the AMF 441, the SMF 442, and the UDM 448 illustrated in FIG. 11 exchange information with each other using the API when establishing a communication session. Conventionally, it is not assumed that an application (e.g., AF 449) uses the API. However, when the AF 449 uses the API, the AF 449 can use information of a 5G cellular network, and it is considered that a function of the application can be further evolved.

Note that it is difficult for the AF 289 to use the API used by the AMF 441, the SMF 442, and the UDM 448 in the public network. However, in the case of a non-public private 5G network, it is considered that the system can be configured including, for example, a change in the API of the core network CN so that the AF 289 can use the API.

Here, an example of the API will be described. An API (1) to an API (4) described here are described in 3GPP TS 23.502.

### API (1)

The API (1) is the API in which the SMF 442 notifies that the UE 30 registered in advance transitions from a power off state to a power on state and attaches to the network and the IP address acquired at that time.

The SMF 442 uses the API (1) to notify the NF when the UE 30 of the registered IMSI obtains the IP address.

### API (2)

The UE 30 enters an idle mode when not communicating, and transitions to a connected mode when communicating. The API (2) is the API in which the AMF 441 notifies whether the UE 30 is in the idle mode or the connected mode.

### API (3)

The API (3) is the API for broadcasting a message (paging message), from the base station, for instructing the UE 30 to transition from the idle mode to the connected mode.

### API (4)

The API (4) is the API in which the AMF 441 provides location information of the UE 30. The AMF 441 may use the API (4) to inform which tracking area the UE 30 is located, which cell the UE 30 belongs to, and when the UE 30 enters a specific region.

Note that an example of the UE 30 in FIG. 11 is the terminal device 30 of the present embodiment. An example of the RAN/AN 430 is the base station 20 of the present embodiment. Furthermore, the management device 10 illustrated in FIG. 7 is an example of a device having a function of, for example, the AF 449 or the AMF 441.

### <3-2. Configuration example of 4G network architecture>

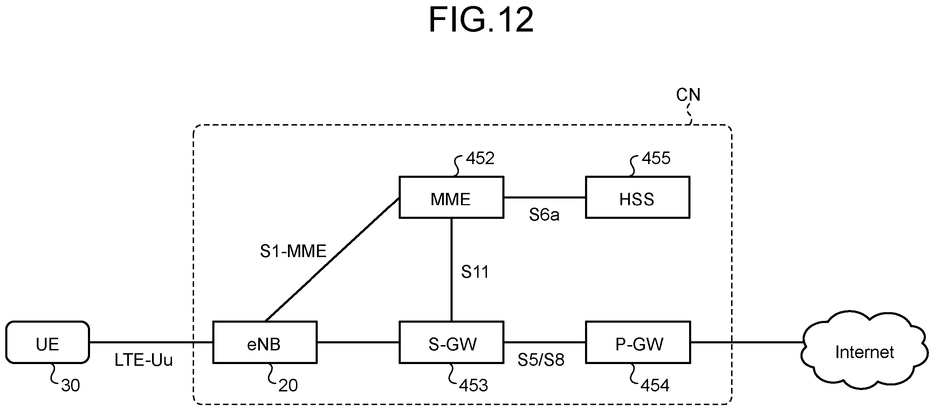

Next, an architecture of a fourth generation mobile communication system (4G) will be described with reference to FIG. 12 as an example of the core network CN of the communication system 1. FIG. 12 is a diagram illustrating an example of a 4G architecture.

Note that the core network CN illustrated in FIG. 12 does not include a localized service control function (LSCF), but the core network CN may include the LSCF as one of the network functions. Obviously, the LSCF may be a network function arranged outside the core network CN.

As illustrated in FIG. 12, the core network CN includes an eNB 20, a mobility management entity (MME) 452, a serving gateway (S-GW) 453, a packet data network gateway (P-GW) 454, and a home subscriber server (HSS) 455.

The eNB 20 functions as a 4G base station. The MME 452 is a control node that handles a control plane signal and manages a movement state of a UE 30. The UE 30 sends an attach request to the MME 452 to attach to the cellular system.

The S-GW 453 is a control node that handles the user plane signal, and is a gateway device that switches a transfer path of user data. A P-GW 454 is a control node that handles the user plane signal and is a gateway device serving as a connection point between the core network CN and the Internet. An HSS 455 is a control node that handles subscriber data and performs service control.

The MME 452 corresponds to functions of the AMF 441 and the SMF 442 in the 5G network. In addition, the HSS 455 corresponds to the function of the UDM 448.

As illustrated in FIG. 12, the eNB 20 is connected to the MME 452 via an S1-MME interface, and is connected to the S-GW 453 via an S1-U interface. The S-GW 453 is connected to the MME 452 via an S11 interface, and the MME 452 is connected to the HSS 455 via an S6a interface. The P-GW 454 is connected to the S-GW 453 via an S5/S8 interface.

### <<4. First embodiment>>

The configuration of the communication system 1 has been described above. Next, the operation of the communication system 1 having the above configuration will be described.

### <4-1. Problem>

In the cellular wireless communication system, it may be difficult to provide communication with high communication performance (e.g., stable communication quality, high communication quality, low delay, high reliability, and high throughput) due to, for example, regional or temporal uneven distribution of communication demands. In particular, in an environment in which a private network is arranged, distribution of UEs is often uneven. Therefore, in the private network, a situation in which there is a large difference in a quality of a communication service that can be provided to the UEs remarkably occurs. When communication performance deteriorates, it is desirable that the network side takes an action (localized service) to compensate for the deterioration in the communication. Such a flexible action can be easily taken in the private network that is a non-public network.

As an action (localized service) to compensate for deterioration of the communication performance, it is assumed that the communication system 1 may start another non-public network or the communication system 1 may increase an internal resource of one non-public network. It is necessary to clarify in what situation the localized service is started, what content the localized service includes, and what trigger condition is used for starting the localized service.

In summary, the following (1) to (3) need to be clarified in order to realize a cellular network with higher communication performance by the localized service.
(1) Trigger condition
(2) Method for detecting trigger condition
(3) Content of localized service

### <4-2. Solution>

Hereinafter, an operation of the communication system 1 that solves the above problem will be described.

The following operation is executed by, for example, a localized service control function (LSCF) included in the management device 10 or the network management device 40. Note that, in the following description, it is assumed that the network management device 40 (or the LSCF included in the network management device 40) executes the following processing, but another information processor such as the management device 10 may execute the processing. In addition, the LSCF in the following description may be replaced with a word indicating other functions (e.g., other control functions included in the core network).

The network management device 40 detects that a predetermined condition regarding communication using a predetermined cellular network is satisfied in at least a part of a providing area of the predetermined cellular network. For example, the network management device 40 detects that the predetermined condition is satisfied in a specific area. Here, the specific area is, for example, a partial area of the providing area of the predetermined cellular network (e.g., predetermined private network). Furthermore, the predetermined condition is a condition serving as a trigger for starting the localized service. Hereinafter, the predetermined condition is also referred to as a trigger condition.

Here, the trigger condition may be whether or not the communication quality of the plurality of terminal devices 30 performing communication in the specific area falls below a predetermined criterion. Here, the communication quality may be reference signals received power (RSRP), reference signal received quality (RSRQ), or signal-to-noise ratio (SINR). The communication quality may be a value calculated based on at least one of RSRP, RSRQ, and SINR. This value may be a value itself of RSRP, RSRQ, or SINR, or may be a value calculated by combining a plurality of values among these values. Hereinafter, the description will be given assuming that the communication quality is RSRP, but RSRP in the following description may be replaced with a word indicating other communication quality (reception quality) such as RSRQ or SINR.

The deterioration of the communication quality (e.g., reception power of RSRP) of a single terminal device 30 frequently occurs when a car or a person that blocks radio waves enters between the terminal device 30 and the base station. However, the deterioration of the reception quality of the plurality of terminal devices 30 often occurs when transmission of radio waves is stopped due to a failure of the nearest base station 20. Therefore, when detecting that the communication quality of the plurality of terminal devices 30 belonging to the base station 20 covering the specific area falls below the predetermined criterion, the network management device 40 considers that a failure or the like has occurred in the base station 20 and starts the localized service.

For example, when the RSRP of a certain number or more (e.g., 1/2 or more) of the terminal devices 30 belonging to the base station 20 falls below a predetermined threshold, the network management device 40 may consider that a failure or the like has occurred in the base station 20 and start the localized service. Furthermore, when the RSRP of a certain number or more (e.g., 1/2 or more) of the terminal devices 30 belonging to the base station 20 decreases by a certain value from an average value in the latest certain period of time, the network management device 40 may consider that a failure or the like has occurred in the base station 20 and start the localized service.

In order to detect that the trigger condition is satisfied, the network management device 40 (e.g., LSCF of the network management device 40) may hold the following values (1) to (3).
(1) Number of terminal devices 30 belonging to base station 20
(2) Latest RSRP value X of each terminal device 30 (e.g., a value acquired within the latest predetermined time (e.g., within the last ten minutes))
(3) Average RSRP value Y of each terminal device 30 (e.g., an average value of the latest predetermined time (e.g., last eight hours))

Here, the threshold for detecting that the trigger condition is satisfied is Z [dB]. At this time, the network management device 40 acquires the number of terminal devices 30 satisfying Y - X > Z in every predetermined time (e.g., every one hour). Then, the network management device 40 starts the localized service when detecting that the number of terminal devices 30 satisfying Y - X > Z is equal to or larger than a predetermined proportion of the number of the terminal devices 30 belonging to the base station 20.

Here, the localized service may be processing for enhancing a communication function related to cellular communication performed in the specific area. For example, when the trigger condition is satisfied, the network management device 40 starts, as the localized service, processing for assisting the base station 20 whose function has deteriorated. For example, when it is detected that the communication quality (e.g., RSRP) of the plurality of terminal devices 30 falls below the predetermined criterion, the network management device 40 may cause the base station 20 to which the plurality of terminal devices 30 is connected to provide communication using another component carrier.

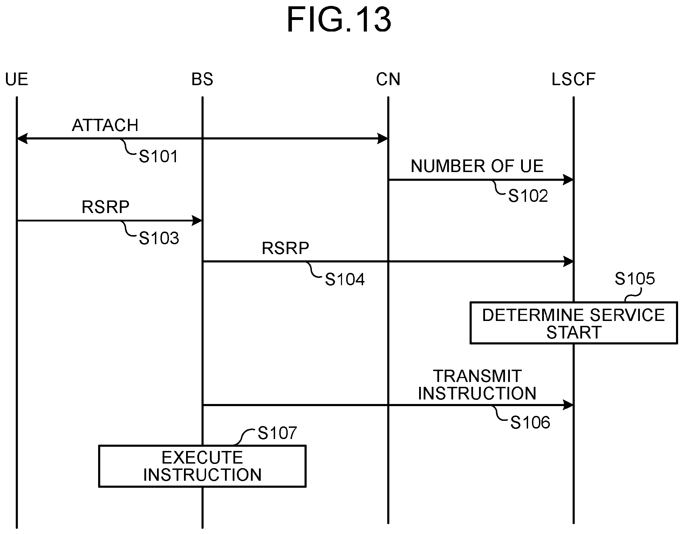

FIG. 13 is a sequence diagram illustrating communication processing according to the first embodiment. Hereinafter, the above processing will be described with reference to the sequence diagram in FIG. 13.

First, the plurality of terminal devices 30 that performs communication in the specific area executes an attach procedure to the core network (management device 10) (Step S101). The core network notifies the LSCF of the number of terminal devices 30 connected to each of the base stations 20 (Step S102). Then, each of the plurality of terminal devices 30 reports the RSRP to the base station 20 (Step S103). The base station 20 notifies the LSCF of the RSRP (Step S104).

When detecting that the communication quality of the plurality of terminal devices 30 belonging to the base station 20 falls below the predetermined criterion, the LSCF determines to start the localized service (Step S105). For example, the LSCF acquires the number of terminal devices 30 satisfying Y - X > Z in every predetermined time (e.g., every one hour). Here, X is the latest RSRP value of each terminal device 30, Y is the average RSRP value of each terminal device 30, and Z is a threshold for detecting that the trigger condition is satisfied. Then, the LSCF determines to start the localized service when detecting that the number of terminal devices 30 satisfying Y - X > Z is equal to or more than a predetermined proportion (e.g., 1/2 or more) of the number of terminal devices 30 belonging to the base station 20.

When determining to start the localized service, the LSCF transmits an instruction for the localized service to the base station 20 (Step S106). For example, the LSCF transmits an instruction for providing communication using another component carrier to the base station 20 to which the terminal device 30 falling below the predetermined criterion is connected. When receiving the instruction, the base station 20 executes the instruction (Step S107). For example, the base station 20 provides communication using another component carrier to the terminal device 30 falling below the predetermined criterion.

Note that the localized service to compensate for deterioration of the communication quality (e.g., reception quality such as the RSRP) of the terminal device 30 is not limited to the above. For example, the local service may be as described in the following (1) to (3). Note that the procedure for starting the localized service described below may be similar to the procedure illustrated in FIG. 13.

### (1) Reset of base station 20

When it is assumed that the reset corrects malfunction in the base station 20, the LSCF instructs the base station to reset.

### (2) Activation of stopped base station 20

The LSCF activates another base station 20 different from the base station 20 to which the terminal device 30 falling below the predetermined criterion is connected. As a result, the LSCF causes the another base station 20 to provide communication in the specific area. For example, the LSCF may activate, via the core network or via a control entity that controls the base station 20, a base station 20 that is suspended in the vicinity of a base station 20 that is estimated to have failed.

### (3) Control of transmission power of another base station 20

The LSCF increases the transmission power of another base station 20 different from the base station 20 to which the terminal device 30 falling below the predetermined criterion is connected. As a result, the LSCF causes the another base station 20 to provide communication in the specific area. For example, the LSCF may increase, via the core network or via the control entity that controls the base station 20, the transmission power of a base station 20 different from a base station 20 that is estimated to have failed. In addition, the LSCF may increase the transmission power of beamforming facing a direction of the base station 20 that is estimated to have failed.

In the present embodiment, the LSCF determines whether or not to provide the localized service based on information on the communication quality of the plurality of terminal devices 30, and not based on information on the communication quality of one terminal device 30. In the above example, the communication quality is RSRP, but the communication quality is not limited to RSRP. For example, the communication quality may be RSRQ. An occurrence of a decrease in the RSRQ means that interference radio waves come from an adjacent base station 20. Therefore, when detecting that the RSRQ of the plurality of terminal devices 30 belonging to the base station 20 covering the specific area fall below the predetermined criterion, the network management device 40 considers that a failure or the like has occurred in the base station 20 and starts the localized service.

For example, when the RSRQ of a certain number or more (e.g., 1/2 or more) of the terminal devices 30 belonging to the base station 20 falls below the predetermined threshold, the network management device 40 may consider that a failure has occurred in the base station 20 and start the localized service. Furthermore, when the RSRQ of a certain number or more (e.g., 1/2 or more) of the terminal devices 30 belonging to the base station 20 decreases by a certain value from the average value in the latest certain period of time, the network management device 40 may consider that a failure has occurred in the base station 20 and start the localized service.

In order to detect that the trigger condition is satisfied, the network management device 40 (e.g., LSCF of the network management device 40) may hold the following values (1) to (3).
(1) Number of terminal devices 30 belonging to base station 20
(2) Latest RSRQ value X of each terminal device 30 (e.g., a value acquired within the latest predetermined time (e.g., within the last ten minutes))
(3) Average RSRQ value Y of each terminal devices 30 (e.g., average value in the latest predetermined time (e.g., last eight hours))

Here, the threshold for detecting that the trigger condition is satisfied is Z [dB]. At this time, the network management device 40 acquires the number of terminal devices 30 satisfying Y - X > Z in every predetermined time (e.g., every one hour). Then, the network management device 40 starts the localized service when detecting that the number of terminal devices 30 satisfying Y - X > Z is equal to or larger than a predetermined proportion of the number of the terminal devices 30 belonging to the base station 20.

Here, the localized service may be processing for enhancing a communication function related to cellular communication performed in the specific area. For example, the localized service may be the following (1) to (3).

### (1) Increase in transmission power

In order to reduce an influence of interference, the LSCF increases the transmission power of the base station 20 to which the terminal device 30 falling below the predetermined criterion is connected.

### (2) Decrease in transmission power of adjacent base station 20

In order to compensate for a decrease in the RSRQ due to interference from the adjacent base station, the LSCF decreases the transmission power of a base station 20 located adjacent to the base station 20 to which the terminal device 30 falling below the predetermined criterion is connected.

### (3) Change of frequency band

In order to avoid interference from an adjacent base station, the LSCF causes the base station 20 to which the terminal device 30 falling below the predetermined criterion is connected to use a frequency band different from a frequency band used by the adjacent base station 20.

According to the first embodiment, when a problem occurs in the specific area (e.g., when a failure occurs in the base station 20 or when a coverage of the base station 20 is decreased), the communication system 1 can immediately detect the problem and enhance the communication function in the area. As a result, the communication system 1 can maintain a high communication performance of the cellular network (e.g., private network).

### <<5. Second embodiment>>

Next, an operation of a communication system 1 according to a second embodiment will be described.

### <5-1. Problem>

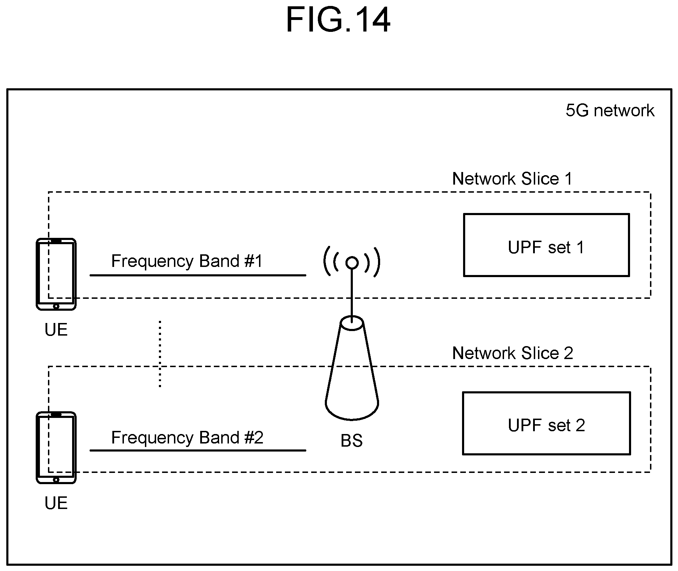

FIG. 14 is a diagram illustrating a network slice. In an example in FIG. 14, the terminal devices 30 belong to different network slices. The network slice includes a RAN network slice and a core network slice as components. Here, the RAN network slice is generally provided by a component carrier (frequency resource), and the core network slice is generally provided by a processing function (computation capability) of a user plane mainly called a user plane function (UPF) of the core network.

This means that when the throughput of the terminal device 30 belonging to a certain base station 20 decreases, it is caused by either an insufficient frequency resource provided by the base station 20 or an insufficient computation resource of the UPF used by the terminal device 30. Therefore, in order to provide a localization service (processing for enhancing a communication function) in a specific area, it is necessary to determine which resource is insufficient.

Conventionally, an information processor (e.g., the management device 10 or the network management device 40) on a network is capable of grasping the number of terminal devices 30 belonging to a specific base station 20, an increase in the number of terminal devices 30 belonging to a specific network slice, and the like. However, this does not always lead to the information processor grasping the network slice used in the specific area. Therefore, in some cases, it is difficult to appropriately provide the localized service to the terminal devices 30 in the specific area.

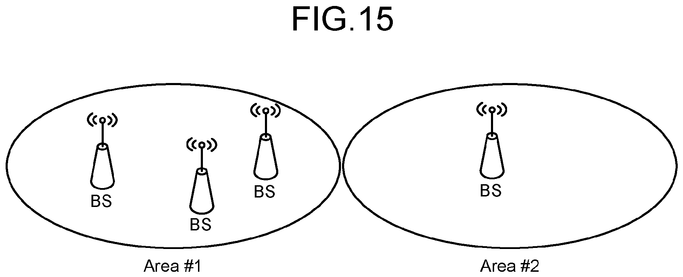

FIG. 15 is a diagram illustrating a problem in the second embodiment. In an example in FIG. 15, an area #1 and an area #2 are illustrated as specific areas. In the example in FIG. 15, there is no information on which network slice is mainly used in these areas. Therefore, in the example in FIG. 15, it is difficult for the information processor to enhance the communication function by enhancing the frequency resource or the computation resource of the network slice in the specific area.

Note that the area in the present embodiment is an area to provide the localized service. Therefore, the area in the present embodiment may be an area covered by one base station 20 or an area covered by a plurality of base stations 20. A range of the area may be defined by an LSCF that manages all localized services.

Note that, in the example in FIG. 15, only the base station 20 is illustrated and not UPF. Although one UPF can be connected to all the base stations 20 in FIG. 15, it is desirable to allocate the UPF for each area. This is because the UPF is an element configuring the network slice while the localized service is desirably provided in units of network slices.

### <5-2. Solution>

The following operation is executed by a localized service control function (LSCF) included in the management device 10 or the network management device 40, similarly to the first embodiment. Note that, in the following description, it is assumed that the network management device 40 (or the LSCF included in the network management device 40) executes the following processing, but another information processor such as the management device 10 may execute the processing. In addition, the LSCF in the following description may be replaced with a word indicating other functions (e.g., other control functions included in the core network).

Similarly to the first embodiment, the network management device 40 detects that a trigger condition is satisfied in at least a part of a providing area of a predetermined cellular network. For example, the network management device 40 detects that the trigger condition is satisfied in the specific area. At this time, the network management device 40 may determine that the trigger condition is satisfied when a throughput of the terminal device 30 in the specific area falls below a predetermined criterion. The specific area is, for example, a partial area of the providing area of the predetermined cellular network (e.g., predetermined private network).

For example, the network management device 40 holds a list of the base stations 20 belonging to the specific area and the terminal devices 30 using these base stations. At the same time, the network management device 40 holds a list of the UPFs used by the terminal devices 30 using the base station 20 belonging to the specific area. Further, the network management device 40 holds information on throughputs of these terminal devices 30. The throughput may be measured periodically using a test signal, or may be measured as a throughput of user data. A measurement point of the throughput may be the UPF. The throughput of user data is affected by a congestion status or the like of an external network (e.g., the Internet outside the private network). Therefore, ideally, it is desirable that the network management device 40 periodically acquires the throughput with an application function arranged near the core network. The trigger condition may also be determined to be satisfied when the throughputs of the plurality of terminal devices 30 in the specific area fall below the predetermined criterion.

Note that, when a plurality of network slices is used in the specific area, the network management device 40 may specify which network slice has insufficient resource. For example, the network management device 40 selects one base station 20 belonging to the specific area, and creates a group of the terminal devices 30 belonging to the base station 20 for each UPF. The network management device 40 measures the throughput of each group. When there is a group having a low throughput, the network management device 40 determines that the frequency resource of the base station 20 or the computer resource of the UPF associated with the group is insufficient. When the base station 20 manages the frequency resource by dividing the frequency resource into a plurality of component carriers or manages the component carrier by dividing the component carrier into a plurality of bandwidth parts (BWPs), the network management device 40 identifies the terminal device 30 using the frequency resource for each component carrier or each BWP, and identifies which UPF the terminal device 30 uses. The network management device 40 creates a plurality of sets of combination of the frequency resource and the UPF, and observes the throughput for each set. Accordingly, it is possible to identify which network slice has insufficient resource.

In executing the above processing, the network management device 40 identifies one or a plurality of network slices provided in the specific area. For example, the network management device 40 identifies one or the plurality of network slices provided in the specific area based on information of the base station 20 belonging to the specific area and information of the UPF allocated to the terminal device 30 connected to the base station 20.

For example, the network management device 40 acquires a list of one or the plurality of base stations 20 belonging to the specific area and the terminal devices 30 connected to one or the plurality of base stations 20. In addition, the network management device 40 acquires a list of the UPFs used by the terminal devices 30 connected to the base station 20 belonging to the specific area. The network management device 40 selects one base station 20 belonging to the specific area, and creates a group for each UPF to which the terminal device 30 connected to the base station 20 belongs. The network management device 40 repeats this process in all the base stations 20 belonging to the specific area. As a result, the network management device 40 identifies one or the plurality of network slices provided in the specific area.

Note that it is assumed that the base station 20 manages the frequency resource by dividing the frequency resource into a plurality of component carriers (CC) or manages the component carrier by dividing the component carrier into a plurality of bandwidth parts (BWPs). In this case, the network management device 40 identifies a terminal device 30 using the frequency resource for each component carrier or each BWP, and identifies which UPF is used by the terminal device 30. The network management device 40 identifies one or the plurality of network slices provided in the specific area by associating the frequency resource with the UPF based on of the identified information. Table 3 is a table indicating identification results of network slices provided in the specific area.

**Table 3**

| Area | Base station | Frequency resource allocation | UPF computation resource allocation |
|---|---|---|---|
| Area #1 | BS #1 | CC #1 | UPF #1 |
| | | | UPF #2 |
| | | | UPF #3 |
| | | CC #2 | UPF #1 |
| | | | UPF #4 |
| | | | UPF #5 |
| Area #2 | BS #2 | CC #2 | UPF #5 |
| | | CC #3 | UPF #6 |

Note that to which base station 20 the UPF is connected depends on which UPF is used by the terminal device 30 connected to the base station 20. Therefore, in the example in Table 3, the base station 20 to which a UPF#1 is connected and the base station 20 to which a UPF#2 is connected overlap. In addition, in the example in Table 3, the same component carrier (CC) is used in a plurality of base stations 20. However, in the example in Table 3, belonging areas of the plurality of base stations 20 are different. Therefore, even when the same CC is used in the plurality of base stations 20, interference does not always occur in the frequency resources. Therefore, the meaning is slightly different from the case where the UPF is used in the plurality of base stations.

In any case, since the frequency resource and the UPF are not individually allocated in one base station 20, and there are two types of components of the network slice as described above, it is difficult to determine whether the RAN network slice (frequency resource) is insufficient or the core network slice (computation resource of the UPF) is insufficient.

In the example in Table 3, a BS#1 belongs to the area #1. The BS#1 manages a plurality of frequency resources (CC#1 and CC#2). The UPFs used by the terminal devices 30 belonging to the frequency resources are UPF#1, #2, and #3 and UPF#1, #4, and #5. In other words, six network slices are provided in the area #1. In the example in Table 3, a BS#2 belongs to the area #2. The BS#2 manages a plurality of frequency resources (CC#2 and CC#3). The UPFs used by the terminal devices 30 belonging to the frequency resources are the UPF#5 and the UPF#6. In other words, two network slices are provided in the area #2. In the above situation, the network management device 40 determines whether the frequency source is insufficient or the computation resource of the UPF is insufficient by measuring the throughput of each UPF.

Specifically, when it is detected that the trigger condition is satisfied in the specific area, the network management device 40 determines whether the frequency resource is insufficient or the computation resource of the UPF is insufficient based on throughput information of the UPF of each of the plurality of network slices, and executes processing (localized service) for increasing the determined resource.

Note that the network management device 40 may acquire a measurement result of the throughput of the entire UPF. However, in this case, a traffic of unrelated terminal devices 30 in another area is also included in the measurement result. Therefore, it is assumed difficult to detect whether or not the throughput is actually decreased in a target network slice (combination of the UPF and the frequency resource). Therefore, it is desirable that the network management device 40 acquires the measurement result of the throughput in the UPF of only the terminal device 30 using the frequency resource of the base station 20 in the area to be examined. As a result, the network management device 40 can easily detect a decrease in the throughput of the target network slice.

As described above, when it is detected that the trigger condition is satisfied in the specific area, the network management device 40 determines whether the frequency resource is insufficient or the computation resource of the UPF is insufficient based on the throughput information of the UPF of each of the plurality of network slices. As a determination method, methods described in the following (A) and (B) are assumed.

In the following (A) and (B), one or a plurality of frequency resources is used in the specific area. Hereinafter, one of the frequency resources used in the specific area is assumed to be a CC#i. Here, i is an integer. When the plurality of frequency resources is used in the specific area, the following processing is repeatedly executed while changing i.

### (A) Determination method 1

A plurality of frequency resources is associated with the frequency resource CC#i. The network management device 40 identifies a ratio of UPFs whose throughput falls below a predetermined criterion to the plurality of UPFs associated with the frequency resource CC#i.

When an identified ratio is larger than the predetermined threshold (e.g., when the number of UPFs falling below the predetermined criterion is half or more), the network management device 40 determines that the frequency resource CC#i is insufficient. In this case, the network management device 40 executes processing for increasing the frequency resource as the localized service.

On the other hand, when the identified ratio is smaller than the predetermined threshold, the network management device 40 determines that the computation resource of the UPF whose throughput falls below the predetermined criterion is insufficient. In this case, the network management device 40 executes processing for increasing the computation resource of the UPF whose throughput falls below the predetermined criterion as the localized service.

### (B) Determination method 2

One or a plurality of UPFs is associated with the frequency resource CC#i. Hereinafter, one of the UPFs associated with the frequency resource CC#i is assumed to be a UPF#j. Here, j is an integer. When the plurality of UPFs is associated with the frequency resource CC#i, the following processing is repeatedly executed while changing j.

When a throughput of the UPF#j is improved when the computation resource of the UPF#j is increased by a predetermined amount among the computation resources of the frequency resource CC#i and the UPF#j, the network management device 40 determines that the computation resource of the UPF#j is insufficient. At this time, the network management device 40 executes processing for increasing the computation resource of the UPF#j as the localized service.

When the throughput of the UPF#j is improved when the frequency resource CC#i is increased by a predetermined amount among the computation resources of the frequency resources CC#i and UPF#j, it is determined that the frequency resource CC#i is insufficient. At this time, the network management device 40 executes processing for increasing the frequency resource CC#i as the localized service.

When the throughput of the UPF#j is not improved even when one of the frequency resource CC#i and the computation resource of the UPF#j is increased, the network management device 40 may determine that both the frequency resource CC#i and the computation resource of the UPF#j are insufficient. In this case, the network management device 40 may execute processing for increasing both the frequency resource CC#i and the computation resource of the UPF#j as the localized service.

Alternatively, when the throughput of the UPF#j is not improved even when one of the frequency resource CC#i and the computation resource of the UPF#j is increased, the network management device 40 may increase both the frequency resource CC#i and the computation resource of the UPF#j by a predetermined amount. Then, when the throughput of the UPF#j is improved as a result of the increase, the network management device 40 may determine that both the frequency resource CC#i and the computation resource of the UPF#j are insufficient. In this case, the network management device 40 may execute processing for increasing both the frequency resource CC#i and the computation resource of the UPF#j as the localized service.

The network management device 40 determines whether to enhance the frequency resource or the computer resource based on the determination method described in above (A) or (B). By this method, the network management device 40 can provide the localized service to the terminal devices 30 in the specific area.

The network management device 40 according to the present embodiment holds, as information, the frequency resource of which area the UPF is associated with. Therefore, the network management device 40 can immediately grasp a corresponding UPF even when investigating whether there is a problem with the throughput in the specific area. Therefore, the technology disclosed in the present embodiment is also useful for monitoring an event or the like in the specific area.

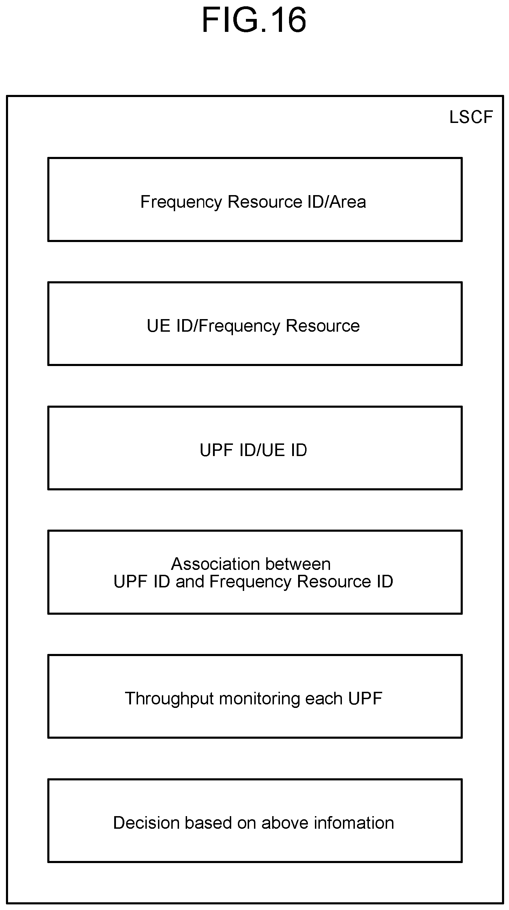

The above processing may be executed by the LSCF. In this case, the LSCF may have a configuration as illustrated in FIG. 16. FIG. 16 is a block diagram illustrating a configuration example of the LSCF.

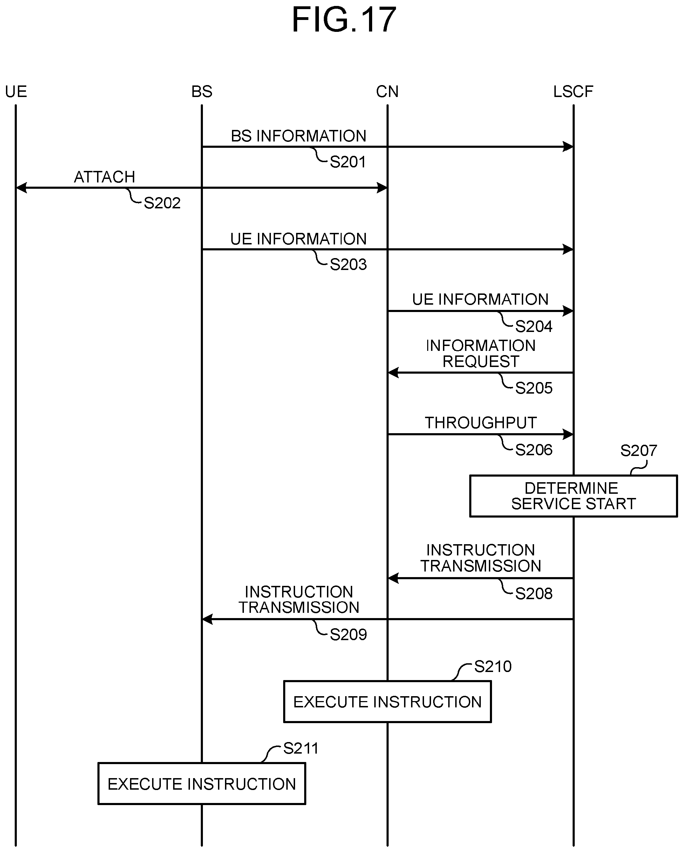

FIG. 17 is a sequence diagram illustrating communication processing according to the second embodiment. Hereinafter, the above processing will be described with reference to the sequence diagram in FIG. 17.

The base station 20 transmits its own information (location information and information on a frequency resource used) to the LSCF (Step S201). A plurality of terminal devices 30 that performs communication in the specific area executes an attach procedure to the core network (management device 10) (Step S202).

When the terminal device 30 is attached, the base station 20 transmits information indicating which frequency resource is used by the terminal device 30 to the LSCF (Step S203). In addition, after the terminal device 30 is attached, the UPF actually allocated to the terminal device 30 is determined. Therefore, the core network (management device 10) transmits the information to the LSCF. Since the core network (management device 10) also knows information indicating to which base station 20 the terminal device 30 belongs, the core network also transmits information on the base station 20 and the frequency resource used by the terminal device 30 to the LSCF (Step S204).

The LSCF can grasp a combination of the frequency resource used in the specific area and the UPF associated with the frequency resource by using this information. In other words, the LSCF can grasp the network slice provided to a partial area. The LSCF collects information on the throughput of the UPF of the network slice from the core network (Step S205 and Step S206).

When detecting that the throughput of the network slice falls below the predetermined criterion, the LSCF determines to start the localized service (Step S207). The LSCF determines, based on the information on the throughput collected in Step S206, whether the frequency resource of the network slice below the predetermined criterion is to be increased or the computation resource of the UPF is to be increased. Then, the LSCF determines the content of the localized service based on the determination result.

When the content of the localized service is determined, the LSCF transmits an instruction for the localized service to the core network and/or the base station 20 (Step S208 and Step S209). When receiving the instruction, the core network and/or the base station 20 executes the instruction (Step S210 and Step S211).

According to the second embodiment, the communication system 1 can determine whether the deterioration in the communication service to the terminal devices 30 in the specific area is caused by insufficient frequency resource or insufficient computer resource of the UPF. As a result, the communication system 1 can appropriately increase the resources.

### <<6. Third embodiment>>

Next, an operation of a communication system 1 according to a third embodiment will be described.

### <6-1. Problem>

In the embodiment, when the number of terminal devices 30 or a traffic volume increases or decreases in one area, the network management device 40 adjusts the frequency resources of the plurality of base stations 20 and the computer resources of the UPF used in the one area. When this area is a plurality of distant areas, it may be desired to optimize communication between the plurality of areas. For example, when the number of terminal devices 30 increases in each of the plurality of areas located at distant, it may be desired to enhance a network function for inter-area communication in advance in anticipation of an increase in a traffic of inter-area communication. In the third embodiment, this problem is solved by providing a localized service by the communication system 1.

### <6-2. Solution>

The following operation is executed by a localized service control function (LSCF) included in the management device 10 or the network management device 40 similarly to the first and second embodiments. Note that, in the following description, it is assumed that the network management device 40 (or the LSCF included in the network management device 40) executes the following processing, but another information processor such as the management device 10 may execute the processing. In addition, the LSCF in the following description may be replaced with a word indicating other functions (e.g., other control functions included in the core network).

The network management device 40 detects that a trigger condition is satisfied in each of a plurality of specific areas located at distant. For example, the network management device 40 detects that the number of terminal devices 30 that are likely to perform inter-area communication in each of the plurality of specific areas exceeds a predetermined threshold. The specific area is, for example, a partial area of the providing area of the predetermined cellular network (e.g., predetermined private network).

Then, when it is detected that the trigger condition is satisfied in each of the plurality of specific areas (e.g., when the number of terminal devices that are likely to perform the inter-area communication in each of the plurality of specific areas exceeds a predetermined threshold), the network management device 40 executes processing (localized service) for enhancing a communication function related to the inter-area communication across the plurality of specific areas. For example, when it is detected that the trigger condition is satisfied in each of the plurality of specific areas, the network management device 40 prepares a new network slice for the inter-area communication.

Specifically, the network management device 40 executes the following processing.

First, the network management device 40 sets a network path so that a communication capacity between the UPFs of the plurality of specific areas (hereinafter referred to as an area #1 and an area #2 provisionally) located at distant is maximized. Then, the network management device 40 configures a network in which IP addresses setting the area #1 and the area #2 as a source IP address or a destination IP address is transmitted by priority control in buffer control by a router between the areas. Then, the network management device 40 discloses, to the terminal device 30, a network slice to be selected when communication between the area #1 and the area #2 is performed from the network side.

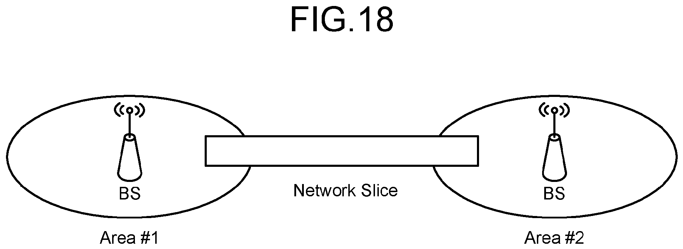

FIG. 18 is a diagram illustrating a network slice newly prepared by the network management device 40. In an example in FIG. 18, only a portion of the core network slice is illustrated as the network slice. However, in practice, this network slice includes radio resources of the area #1 and the area #2 and a computation resource of the UPF in the core network. For this network slice, the network management device 40 may dedicatedly allocate a specific frequency resource (e.g., a component carrier or a BWP) as the radio resource in the area #1 and the area #2.

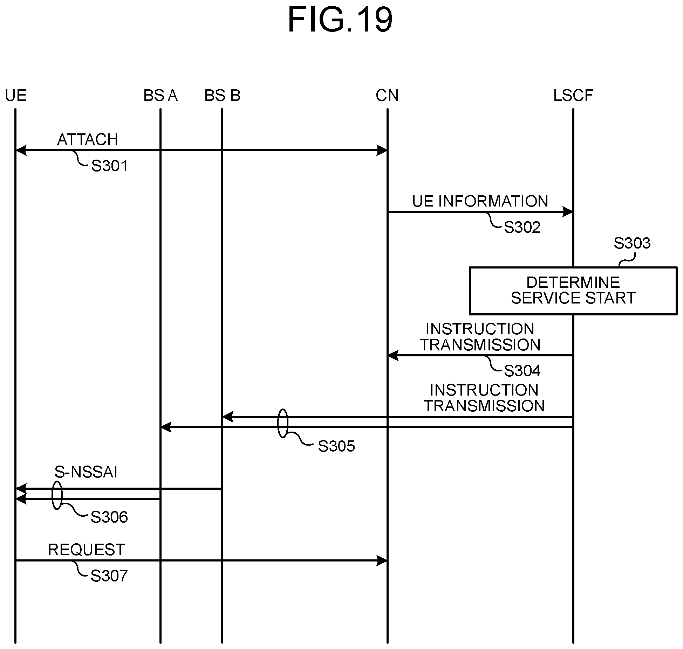

FIG. 19 is a sequence diagram illustrating communication processing according to the third embodiment. In FIG. 19, a BS A is the base station 20 covering the area #1, and a BS B is the base station 20 covering the area #2. Although only one core network (CN) is illustrated in FIG. 19, the core network may be present in each of the area #1 and the area #2. Hereinafter, the above processing will be described with reference to the sequence diagram in FIG. 19.

A plurality of terminal devices 30 that performs communication in the area #1 and the area #2 executes an attach procedure to the core network (management device 10) (Step S301). The LSCF acquires the location information of the terminal device 30 from the core network (Step S302). At this time, the LSCF may collect the location information of the terminal device 30 grasped, using a positioning function, by an access management function (AMF) or a location management function (LMF) of the core network. Furthermore, the LSCF may collect the location information grasped by the terminal device 30 using a navigation signal from a global navigation satellite system (GNSS) such as a global positioning system (GPS).

The LSCF detects that a trigger condition is satisfied in each of the area #1 and the area #2. For example, the LSCF detects that the number of terminal devices 30 that may perform the inter-area communication in each of the area #1 and the area #2 exceeds a predetermined threshold. For example, it is detected that there are X or more terminal devices 30 in each of the area #1 and the area #2.

When it is detected that the trigger condition is satisfied in each of the area #1 and the area #2, the LSCF determines to start the localized service (Step S303). For example, when it is detected that the trigger condition is satisfied in each of the area #1 and the area #2, the LSCF prepares a new network slice connecting the area #1 and the area #2. More specifically, the LSCF transmits an instruction for preparing a new network slice to the core network, the BS A, and the BS B (Step S304 and Step S305).

After preparing the new network slice, the LSCF notifies the terminal device 30 that there is a new network slice connecting the area #1 and the area #2. For example, the LSCF notifies the terminal device 30 that there is a new network slice by broadcast via the BS A and the BS B (Step S306). For example, the LSCF discloses information for identifying a new network slice to the terminal device 30. The information for identifying the network slice is, for example, single-network slice selection assistance information (S-NSSAI).

The terminal device 30 that desires communication between the area #1 and the area #2 transmits a request for permission to use the new network slice to the core network (Step S307). When the use is permitted, the terminal device 30 performs the inter-area communication by using the new network slice.

According to the third embodiment, the communication system 1 can configure a network slice specialized for communication between a plurality of areas and notify the terminal device 30 that the network slice can be used. Accordingly, the communication system 1 can improve the quality of the inter-area communication.

### <<7. Fourth embodiment>>

Next, an operation of a communication system 1 according to a fourth embodiment will be described.

### <7-1. Problem>

In an emergency such as a fire or an earthquake, a server of each of a plurality of communication carriers provides information to a user through each public land mobile network (PLMN), and congestion may occur. Further, in an emergency (e.g., occurrence of earthquake), the PLMN to which the server itself belongs may fail, and a service may not be provided to the user. Furthermore, in an emergency, there is a case where it is desired to prepare the PLMN that provides only information corresponding to the area (e.g., earthquake-struck area). Therefore, it is required to launch a new PLMN in the emergency to provide a localized service. In this case, it is not clear what kind of institution triggers the start of the service, what conditions are required for the terminal device 30 to receive the service, and/or which PLMN is provided.

### <7-2. Solution>

The following operation is executed by a localized service control function (LSCF) included in the management device 10 or the network management device 40 similarly to the first to third embodiments. Note that, in the following description, it is assumed that the network management device 40 (or the LSCF included in the network management device 40) executes the following processing, but another information processor such as the management device 10 may execute the processing. In addition, the LSCF in the following description may be replaced with a word indicating other functions (e.g., other control functions included in the core network).

When a notification related to an emergency response is received from an authenticated external device (hereinafter referred to as an authentication server), the network management device 40 launches a communication service for public safety as the localization service in at least a part of a providing area of a predetermined cellular network. For example, when a notification of occurrence of emergency is received from the authenticated external device (hereinafter referred to as an authentication server), the network management device 40 executes processing for causing the terminal device 30 to use the communication function without authentication. Here, the predetermined cellular network may be the private network or the PLMN. The authentication server may be a server authenticated by an authentication organization or may be a server authenticated by an administrator of the communication system 1.

More specifically, when the notification of occurrence of emergency is received from the authentication server, the network management device 40 may launch the communication service (localization service) that authenticates any subscriber identity module (SIM) of the terminal device 30 (i.e., terminal device 30 corresponding to any operator's PLMN) regardless of which operator's SIM, so that all terminal devices 30 can access the communication service. In this case, the authentication server that performs the notification triggering the start of the service may be a fire alarm. In the case of an earthquake, a natural disaster, or the like, the authentication server may be a server managed by the Meteorological Agency. At this time, it is important for the network management device 40 to correctly authenticate a destination that can launch the localization service (destination that can make a notification). This is to prevent the localization service from being launched by a third party due to impersonation or the like. It is necessary for the network management device 40 to identify in advance a device to which a trigger can be applied in an emergency.

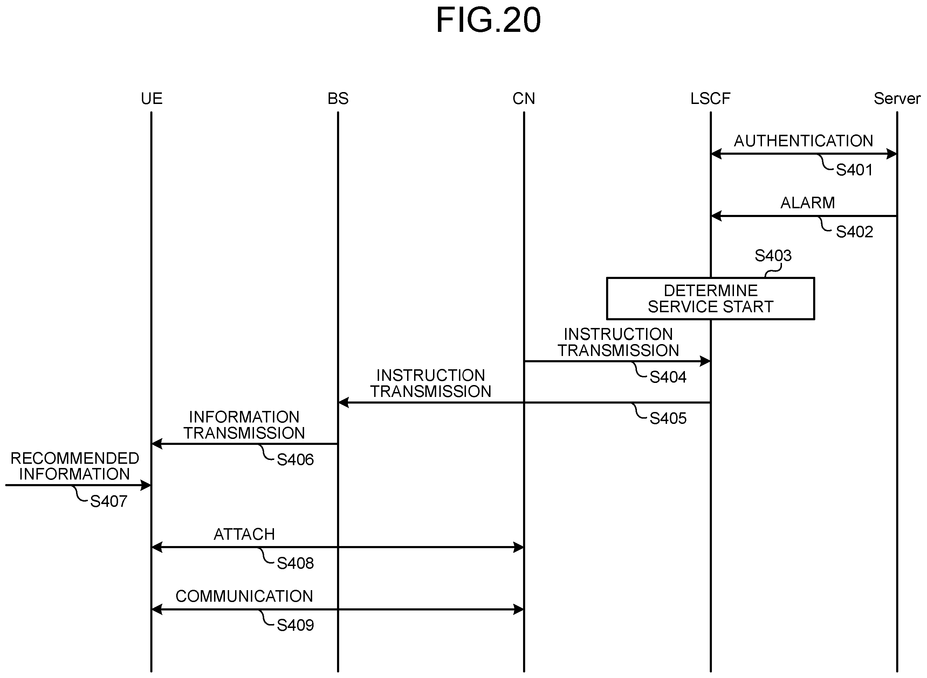

FIG. 20 is a sequence diagram illustrating communication processing according to the fourth embodiment. Hereinafter, the above processing will be described with reference to the sequence diagram in FIG. 20.

First, the LSCF and the server perform authentication in advance (Step S401). Then, when the alarm notifying an occurrence of emergency is received (Step S402), the LSCF determines to start the localized service for emergency occasion (Step S403). At this time, the LSCF may prepare a network slice that can support multiple connections as the localized service for emergency occasion. The network slice that can support multiple connections may be, for example, a network slice for enhanced machine type communication (eMTC). In the following description, it is assumed that the network slice that can support multiple connections is a network slice for eMTC, but a network slice that can support multiple connections is not limited thereto.

Specifically, the LSCF instructs the core network and the base station 20 to prepare a network slice for eMTC (Step S404 and Step S405). After preparing the network slice for eMTC, the LSCF notifies the terminal device 30 that there is a PLMN for emergency access. For example, the LSCF transmits information notifying the PLMN for emergency access (hereinafter referred to as an emergency PLMN.) to the terminal device 30 by broadcast via the base station 20 (Step S406).

The terminal device 30 receives recommended information for emergency (e.g., information on emergency PLMN) from an external device (or an internal application) (Step S407). The terminal device 30 detects the emergency PLMN and attaches to the PLMN (Step S408). In a normal PLMN, the core network authenticates whether the terminal device 30 is allowed to access by using a key in the SIM. However, in the localized service for emergency occasion, the core network does not perform this authentication, and allows attachment of all the terminal devices 30 making an attach request.

In the LSCF, it is desirable that the name of the emergency PLMN is a name that can be recognized as an emergency **(e.g.,** "PLMN_emergency"). For example, when a radio wave of a PLMN named "PLMN_emergency" is found, the terminal device 30 understands that the terminal device 30 can attach to the PLMN without authentication, and may attach to the PLMN according to an applicable procedure. Note that the terminal device 30 may sweep whether there is a PLMN with a predetermined name **(e.g.,** "PLMN_emergency") once in a certain period while being attached to a conventional PLMN. Furthermore, the terminal device 30 may receive a trigger for searching the PLMN named "PLMN_emergency" via an application installed in the terminal device 30. When the trigger is received, the terminal device 30 may search for a PLMN with that name. When the PLMN is found, the terminal device 30 may attach to the PLMN found.

When attachment to the emergency PLMN is completed, the terminal device 30 performs communication using the emergency PLMN (Step S409).

According to the fourth embodiment, the communication system 1 can provide the PLMN that can be accessed by the terminal device 30 having any SIM in emergency occasions. As a result, the user can perform emergency contact and safety confirmation. In addition, since many terminal devices 30 use the emergency PLMN in an emergency occasion, it is possible to reduce congestion as a whole as compared with the case where the terminal devices 30 separately use the conventional PLMN.

### <<8. Modification>>

The above-described embodiments are examples, and various modifications and applications are possible.

For example, in the above-described embodiments, the predetermined cellular network is a private network, but the predetermined cellular network is not limited to the private network. The predetermined cellular network may be a cellular network provided by a telecommunications carrier. Further, the predetermined cellular network may be another public network. In addition, the private network may be a private network other than 4G/5G.

In addition, the technology disclosed in the present embodiment (first to fourth embodiments) is also applicable to networks other than the cellular network. For example, the technology disclosed in the present embodiment is also applicable to a LAN network. At this time, the LAN network includes not only a wireless LAN network but also a wired LAN network. Furthermore, the technology disclosed in the present embodiment is also applicable to a network using a radio access technology other than LTE and NR. For example, the technology disclosed in the present embodiment is also applicable to a network using a radio access technology such as Wi-Fi, Bluetooth, or LPWA. In addition, the technology disclosed in the present embodiment is also applicable to a network using a radio access technology of a unique standard. At this time, the description of the "predetermined cellular network" in the present embodiments can be appropriately replaced with a description indicating these networks (e.g., LAN network).

Obviously, the predetermined cellular network may be a cellular network using a radio access technology such as LTE or NR. At this time, the predetermined cellular network may be a network using another radio access technology such as W-CDMA or cdma2000. In addition, the predetermined cellular network may include a network using a radio access technology of a unique standard, or may include a network using a radio access technology after 5G (e.g., 6G).

A control device that controls the management device 10, the base station 20, the terminal device 30, and the network management device 40 of the present embodiments may be realized by a dedicated computer system or a general-purpose computer system.

For example, a communication program for executing the above-described operation is stored and distributed in a computer-readable recording medium such as an optical disk, a semiconductor memory, a magnetic tape, or a flexible disk. Then, for example, the program is installed on a computer, and the above-described processes are executed to configure the control device. Here, the control device may be a device (e.g., personal computer) outside the management device 10, the base station 20, and the terminal device 30. Furthermore, the control device may be a device inside the management device 10, the base station 20, the terminal device 30, and the network management device 40 (e.g., the control unit 13, the control unit 23, the control unit 33, and the control unit 43).

In addition, the above communication program may be stored in a disk device included in a server device on a network such as the Internet so that the communication program can be downloaded to the computer. In addition, the above-described functions may be realized by cooperation of an operating system (OS) and application software. In this case, a portion other than the OS may be stored in a medium and distributed, or a portion other than the OS may be stored in a server device and downloaded to the computer.

Among the processes described in the above embodiments, all or part of the processes described as being performed automatically can be performed manually, or all or part of the processes described as being performed manually can be performed automatically by a known method. In addition, the processing procedure, specific name, and information including various data and parameters illustrated in the above document and the drawings can be arbitrarily changed unless otherwise specified. For example, various types of information illustrated in each drawing are not limited to the illustrated information.

In addition, each component of each device illustrated in the drawings is functionally conceptual, and is not necessarily physically configured as illustrated in the drawings. In other words, a specific form of distribution and integration of each device is not limited to the illustrated form, and all or a part thereof can be functionally or physically distributed and integrated in an arbitrary unit according to various loads, usage conditions, and the like. Note that this configuration by distribution and integration may be performed dynamically.

In addition, the above-described embodiments can be appropriately combined in a region in which the processing content do not contradict each other. Furthermore, the order of each step illustrated in the flowchart of the above-described embodiments can be appropriately changed.

Furthermore, for example, the present embodiment can be implemented as any configuration constituting an apparatus or a system, for example, a processor as a system large scale integration (LSI) or the like, a module using a plurality of processors or the like, a unit using a plurality of modules or the like, a set obtained by further adding other functions to a unit, or the like (i.e., configuration of a part of device).

Note that, in the present embodiment, the system means a set of a plurality of components (devices, modules (parts), etc.), and it does not matter whether or not all the components are in the same housing. Therefore, the plurality of devices housed in separate housings and connected via the network and one device in which a plurality of modules is housed in one housing are both systems.

Furthermore, for example, the present embodiments can adopt a configuration of cloud computing in which one function is shared and processed by a plurality of devices in cooperation via a network.

### <<9. Conclusion>>

As described above, the communication system 1 according to the present embodiments detects that a predetermined condition regarding communication using a predetermined cellular network is satisfied in at least a part of a providing area of a predetermined cellular network. For example, the communication system 1 detects that the communication quality of the plurality of terminal devices 30 that performs communication in the specific area falls below a predetermined criterion.

Then, when it is detected that the predetermined condition is satisfied, the communication system 1 executes processing for enhancing the communication function related to communication performed in the area satisfying the predetermined condition. For example, when it is detected that the predetermined condition is satisfied in the specific area, the communication system 1 provides the localized service for enhancing the communication function related to communication performed in the specific area.

As a result, the communication system 1 of the present embodiments can realize communication with high communication performance even when regional or temporal uneven distribution of communication demands occurs.

Although the embodiments of the present disclosure have been described above, the technical scope of the present disclosure is not limited to the above-described embodiments as it is, and various modifications can be made without departing from the gist of the present disclosure. In addition, the components of different embodiments and modifications may be appropriately combined.

Note that the effects of each embodiment described in the present specification are merely examples and not limited thereto, and other effects may be provided.

The present technology may also have the following configurations.
(1) An information processor comprising:
   a detection unit configured to detect that a predetermined condition regarding communication using a predetermined cellular network is satisfied in at least a part of a providing area of the predetermined cellular network; and
   an execution unit configured to execute, when it is detected that the predetermined condition is satisfied, processing for enhancing a communication function related to the communication performed in an area where it is detected that the predetermined condition is satisfied.
(2) The information processor according to (1), wherein
   the detection unit detects that the predetermined condition is satisfied in a partial area of the providing area, and
   when it is detected that the predetermined condition is satisfied in the partial area, the execution unit executes the processing for enhancing the communication function related to the communication performed in the partial area.
(3) The information processor according to (2), wherein
   the predetermined cellular network is a private network.
(4) The information processor according to (3), wherein
   the detection unit detects that a communication quality of a plurality of terminal devices performing the communication in the partial area falls below a predetermined criterion, and
   the execution unit executes the processing for enhancing the communication function when it is detected that the communication quality of the plurality of terminal devices falls below the predetermined criterion.
(5) The information processor according to (4), wherein
   the detection unit detects that the communication quality of the plurality of terminal devices connected to a base station that covers the communication in the partial area falls below the predetermined criterion, and
   the execution unit executes the processing for enhancing the communication function when it is detected that the communication quality of the plurality of terminal devices falls below the predetermined criterion.
(6) The information processor according to (5), wherein
   when it is detected that the communication quality of the plurality of terminal devices falls below the predetermined criterion, the execution unit causes the base station to which the plurality of terminal devices is connected to provide the communication using another component carrier.
(7) The information processor according to (5) or (6), wherein
   when it is detected that the communication quality of the plurality of terminal devices falls below the predetermined criterion, the execution unit causes another base station to provide the communication for the partial area, the another base station being different from the base station to which the plurality of terminal devices is connected.
(8) The information processor according to any one of (4) to (7), wherein
   the communication quality is a value identified based on at least one of reference signals received power (RSRP), reference signal received quality (RSRQ), and signal-to-noise ratio (SINR).
(9) The information processor according to (3), further comprising
   an identification unit configured to identify a plurality of network slices provided in the partial area, wherein
   when it is detected that the predetermined condition is satisfied in the partial area, the execution unit determines whether a frequency resource is insufficient or a computation resource of a user plane function (UPF) is insufficient based on throughput information of the UPF of each of the plurality of network slices, and executes processing for increasing a resource determined to be insufficient.
(10) The information processor according to (9), wherein
   the identification unit identifies the plurality of network slices provided in the partial area based on information on a base station belonging to the partial area and information on a UPF allocated to a terminal device connected to the base station.
(11) The information processor according to (9) or (10), wherein
   at least a first frequency resource is used in the partial area,
   the first frequency resource is associated with a plurality of the UPFs, and
   the execution unit
   identifies a proportion of a UPF whose throughput falls below a predetermined criterion in the plurality of UPFs,
   determines that the first frequency resource is insufficient when the proportion is larger than a predetermined threshold, and executes processing for increasing the first frequency resource, and
   determines that the computation resource of the UPF whose throughput falls below the predetermined criterion is insufficient when the proportion is smaller than the predetermined threshold, and executes processing for increasing the computation resource of the UPF whose throughput falls below the predetermined criterion.
(12) The information processor according to any one of (9) to (11), wherein
   at least a first frequency resource is used in the partial area,
   the first frequency resource is associated with at least a first UPF, and
   the execution unit
   determines that the computation resource of the first UPF is insufficient when a throughput of the first UPF is improved by increasing the computation resource of the first UPF by a predetermined amount in the first frequency resource and the computation resource of the first UPF, and executes processing for increasing the computation resource of the first UPF, and
   determines that the first frequency resource is insufficient when the throughput of the first UPF is improved by increasing the first frequency resource by a predetermined amount in the first frequency resource and the computation resource of the first UPF, and executes processing for increasing the first frequency resource.
(13) The information processor according to (12), wherein
   when the throughput of the first UPF is not improved by increasing the first frequency resource or the computation resource of the first UPF, the execution unit determines that both the first frequency resource and the computation resource of the first UPF are insufficient, and executes processing for increasing both the first frequency resource and the computation resource of the first UPF.
(14) The information processor according to (12), wherein
   the execution unit
   increases both the first frequency resource and the computation resource of the first UPF by the predetermined amount when the throughput of the first UPF is not improved by increasing the first frequency resource or the computation resource of the first UPF, and
   determines that both the first frequency resource and the computation resource of the first UPF are insufficient when the throughput of the first UPF is improved as a result of the increase, and executes processing for increasing both the first frequency resource and the computation resource of the first UPF.
(15) The information processor according to (1), wherein
   the detection unit detects that the predetermined condition regarding communication using the predetermined cellular network is satisfied in each of a plurality of areas located at distant from each other in the providing area, and
   when it is detected that the predetermined condition is satisfied in each of the plurality of areas, the execution unit executes processing for enhancing the communication function related to inter-area communication across the plurality of areas.
(16) The information processor according to (15), wherein
   the detection unit detects that a number of terminal devices likely to perform the inter-area communication in each of the plurality of areas exceeds a predetermined threshold, and
   the execution unit executes the processing for enhancing the communication function related to the inter-area communication when the number of terminal devices likely to perform the inter-area communication in each of the plurality of areas exceeds the predetermined threshold.
(17) The information processor according to (15) or (16), wherein
   the execution unit prepares a new network slice for the inter-area communication when it is detected that the predetermined condition is satisfied in each of the plurality of areas.
(18) The information processor according to any one of (1) to (17), wherein
   the execution unit executes processing for causing a terminal device to use the communication function without authentication in at least the part of the providing area when a notification regarding an emergency response is received from an authenticated external device.
(19) The information processor according to any one of (1) to (18), wherein
   the information processor is an apparatus having a function as a core network.
(20) An information processing method comprising:
   detecting that a predetermined condition regarding communication using a predetermined cellular network is satisfied in at least a part of a providing area of the predetermined cellular network; and
   executing, when it is detected that the predetermined condition is satisfied, processing for enhancing a communication function in an area where it is detected that the predetermined condition is satisfied.

### Reference Signs List

1 COMMUNICATION SYSTEM
10 MANAGEMENT DEVICE
20 BASE STATION
30 TERMINAL DEVICE
40 NETWORK MANAGEMENT DEVICE
11, 41 COMMUNICATION UNIT
21, 31 WIRELESS COMMUNICATION UNIT
12, 42 INPUT UNIT
22, 32 STORAGE UNIT
13, 23, 33, 43 CONTROL UNIT
211, 311 TRANSMISSION PROCESSING UNIT
212, 312 RECEPTION PROCESSING UNIT
213, 313 ANTENNA
131, 431 DETECTION UNIT
132, 432 EXECUTION UNIT
133, 433 IDENTIFICATION UNIT

## Claims

1. An information processor comprising:
a detection unit configured to detect that a predetermined condition regarding communication using a predetermined cellular network is satisfied in at least a part of a providing area of the predetermined cellular network; and
an execution unit configured to execute, when it is detected that the predetermined condition is satisfied, processing for enhancing a communication function related to the communication performed in an area where it is detected that the predetermined condition is satisfied.

2. The information processor according to claim 1, wherein
the detection unit detects that the predetermined condition is satisfied in a partial area of the providing area, and
when it is detected that the predetermined condition is satisfied in the partial area, the execution unit executes the processing for enhancing the communication function related to the communication performed in the partial area.

3. The information processor according to claim 2, wherein
the predetermined cellular network is a private network.

4. The information processor according to claim 3, wherein
the detection unit detects that a communication quality of a plurality of terminal devices performing the communication in the partial area falls below a predetermined criterion, and
the execution unit executes the processing for enhancing the communication function when it is detected that the communication quality of the plurality of terminal devices falls below the predetermined criterion.

5. The information processor according to claim 4, wherein
the detection unit detects that the communication quality of the plurality of terminal devices connected to a base station that covers the communication in the partial area falls below the predetermined criterion, and
the execution unit executes the processing for enhancing the communication function when it is detected that the communication quality of the plurality of terminal devices falls below the predetermined criterion.

6. The information processor according to claim 5, wherein
when it is detected that the communication quality of the plurality of terminal devices falls below the predetermined criterion, the execution unit causes the base station to which the plurality of terminal devices is connected to provide the communication using another component carrier.

7. The information processor according to claim 5, wherein
when it is detected that the communication quality of the plurality of terminal devices falls below the predetermined criterion, the execution unit causes another base station to provide the communication for the partial area, the another base station being different from the base station to which the plurality of terminal devices is connected.

8. The information processor according to claim 4, wherein
the communication quality is a value identified based on at least one of reference signals received power (RSRP), reference signal received quality (RSRQ), and signal-to-noise ratio (SINR).

9. The information processor according to claim 3, further comprising
an identification unit configured to identify a plurality of network slices provided in the partial area, wherein
when it is detected that the predetermined condition is satisfied in the partial area, the execution unit determines whether a frequency resource is insufficient or a computation resource of a user plane function (UPF) is insufficient based on throughput information of the UPF of each of the plurality of network slices, and executes processing for increasing a resource determined to be insufficient.

10. The information processor according to claim 9, wherein
the identification unit identifies the plurality of network slices provided in the partial area based on information on a base station belonging to the partial area and information on a UPF allocated to a terminal device connected to the base station.

11. The information processor according to claim 9, wherein
at least a first frequency resource is used in the partial area,
the first frequency resource is associated with a plurality of the UPFs, and
the execution unit
identifies a proportion of a UPF whose throughput falls below a predetermined criterion in the plurality of UPFs,
determines that the first frequency resource is insufficient when the proportion is larger than a predetermined threshold, and executes processing for increasing the first frequency resource, and
determines that the computation resource of the UPF whose throughput falls below the predetermined criterion is insufficient when the proportion is smaller than the predetermined threshold, and executes processing for increasing the computation resource of the UPF whose throughput falls below the predetermined criterion.

12. The information processor according to claim 9, wherein
at least a first frequency resource is used in the partial area,
the first frequency resource is associated with at least a first UPF, and
the execution unit
determines that the computation resource of the first UPF is insufficient when a throughput of the first UPF is improved by increasing the computation resource of the first UPF by a predetermined amount in the first frequency resource and the computation resource of the first UPF, and executes processing for increasing the computation resource of the first UPF, and
determines that the first frequency resource is insufficient when the throughput of the first UPF is improved by increasing the first frequency resource by a predetermined amount in the first frequency resource and the computation resource of the first UPF, and executes processing for increasing the first frequency resource.

13. The information processor according to claim 12, wherein
when the throughput of the first UPF is not improved by increasing the first frequency resource or the computation resource of the first UPF, the execution unit determines that both the first frequency resource and the computation resource of the first UPF are insufficient, and executes processing for increasing both the first frequency resource and the computation resource of the first UPF.

14. The information processor according to claim 12, wherein
the execution unit
increases both the first frequency resource and the computation resource of the first UPF by the predetermined amount when the throughput of the first UPF is not improved by increasing the first frequency resource or the computation resource of the first UPF, and
determines that both the first frequency resource and the computation resource of the first UPF are insufficient when the throughput of the first UPF is improved as a result of the increase, and executes processing for increasing both the first frequency resource and the computation resource of the first UPF.

15. The information processor according to claim 1, wherein
the detection unit detects that the predetermined condition regarding communication using the predetermined cellular network is satisfied in each of a plurality of areas located at distant from each other in the providing area, and
when it is detected that the predetermined condition is satisfied in each of the plurality of areas, the execution unit executes processing for enhancing the communication function related to inter-area communication across the plurality of areas.

16. The information processor according to claim 15, wherein
the detection unit detects that a number of terminal devices likely to perform the inter-area communication in each of the plurality of areas exceeds a predetermined threshold, and
the execution unit executes the processing for enhancing the communication function related to the inter-area communication when the number of terminal devices likely to perform the inter-area communication in each of the plurality of areas exceeds the predetermined threshold.

17. The information processor according to claim 15, wherein
the execution unit prepares a new network slice for the inter-area communication when it is detected that the predetermined condition is satisfied in each of the plurality of areas.

18. The information processor according to claim 1, wherein
the execution unit executes processing for causing a terminal device to use the communication function without authentication in at least the part of the providing area when a notification regarding an emergency response is received from an authenticated external device.

19. The information processor according to claim 1, wherein
the information processor is an apparatus having a function as a core network.

20. An information processing method comprising:
detecting that a predetermined condition regarding communication using a predetermined cellular network is satisfied in at least a part of a providing area of the predetermined cellular network; and
executing, when it is detected that the predetermined condition is satisfied, processing for enhancing a communication function in an area where it is detected that the predetermined condition is satisfied.
